# EUROPEAN PATENT SPECIFICATION

(11) **EP 3 556 686 B1**
(45) Date of publication and mention of the grant of the patent: **06.12.2023**
(21) Application number: 17881040.4
(22) Date of filing: 19.10.2017
(51) Int. Cl.: B65D 88/12, B29C 70/22, B29B 11/16, B29C 70/84, B29C 70/02, B29C 70/14, B29C 70/12, B29C 43/34, B29C 43/18, B29C 70/08

(54) **COMPOSITE MATERIAL FORMING METHOD, AND COMPOSITE MATERIAL**
FORMVERFAHREN FÜR VERBUNDSTOFF UND VERBUNDSTOFF
PROCÉDÉ DE FORMATION DE MATÉRIAU COMPOSITE, ET MATÉRIAU COMPOSITE

(30) Priority: 14.12.2016 JP 2016242509
(43) Date of publication of application: 23.10.2019
(73) Proprietor: Mitsubishi Heavy Industries, Ltd., Chiyoda-ku Tokyo 100-8332 (JP)
(72) Inventor: KAMO, Sota, Tokyo 108-8215 (JP); YOSHINO, Katsuya, Tokyo 108-8215 (JP); ISHIDA, Jun, Tokyo 108-8215 (JP)
(74) Representative: Henkel & Partner mbB
(86) International application number: PCT/JP2017/037866
(87) International publication number: WO 2018/110079

(56) References cited:
- EP-A1- 2 565 021
- JP-A- S5 455 087
- JP-A- H06 312 426
- JP-A- 2001 106 288
- JP-A- 2006 188 791
- JP-A- 2015 189 150
- US-A1- 2012 045 606

## Description

### Field

The present invention relates to a method for forming a composite material having a corner, and a composite material having a corner.

### Background

Having been known as a material that is light-weighted and highly strong is a composite material in which reinforced fibers are impregnated with resin. A composite material is formed into various shapes, including a shape having a corner, for example, and is used in aircrafts, automobiles, and ships, for example. Known as a method for forming a composite material having a corner is a method in which a composite material that is to be formed into some shape having a corner is placed on a jig for forming the composite material, a sheet is placed on the composite material, the composite material is then pressed via the sheet (see JP 2007-118 598 A).

EP 2 565 021 A1 discloses a method of forming a composite material with a corner. The composite material is composed of two preformed L-shaped members of carbon fibre epoxy resin matrix material which each have a first flange piece and an upright second flange piece. The second flange pieces are abutted rear face to rear face to form a T-shaped member. A third flange part protrudes outward perpendicular from an axial end of each of the second flange pieces in opposite directions to form approximately a corner situation at each L-shaped member but without intersecting the first flange part. An elongated filler component made from a plastics material is trapped between the two L-shaped pieces so as to fill a cutout or recess at the axial end of the intersection between the first and second flange pieces where the corner is to be located and the entire length between the third and first flange parts.

JP 2006 188791 A discloses a method of forming a composite material with a corner where the composite material is formed from sheets of prepreg material and the sheets are cut-out at the portions intended to form the corner when laminated in a mold. The corners seem to be thus integrally formed by overlaying or folding the cut prepreg layers and the corner is finally covered on the outside by a smaller patch of the prepreg material folded into the corner.

### Summary

### Technical Problem

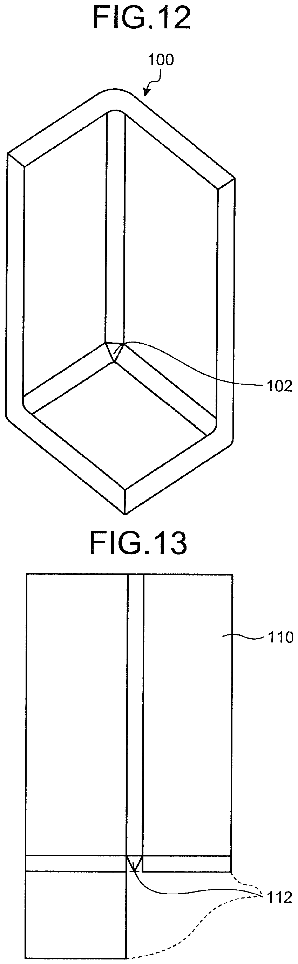

A conventional method for forming a composite material that is the same as that disclosed in JP 2007-118 598 A will now be explained with reference to FIGS. 12 and 13. FIG. 12 is a schematic of a conventional composite material 100 formed by the conventional method for forming a composite material. FIG. 13 is a schematic of a conventional member 110 used as a member for forming the conventional composite material 100 illustrated in FIG. 12.

The conventional composite material 100 has a conventional corner 102 at which a trihedral angle is formed, as illustrated in FIG. 12. The conventional member 110 includes members for forming the three faces, and a conventional corner piece 112 provided between the members for forming the three faces, as illustrated in FIG. 13. The conventional member 110 is obtained by being bent, laminated, and shaped using the method disclosed in JP 2007-118 598 A so as to have the shape of the conventional member 110. The conventional corner piece 112 is laminated, bent around the periphery, and is formed into the conventional corner 102 using the method disclosed in JP 2007-118 598 A.

Because the conventional corner piece 112 is bent around the periphery, the conventional corner piece 112 is highly likely to become wrinkled or spaced from, or to overlap with another member surrounding the conventional corner piece 112 in an unintended fashion, and it has been difficult to achieve a high-quality lamination. Therefore, the conventional corner 102 resultant of laminating the conventional corner piece 112 is highly likely to become wrinkled or spaced from, or to overlap with another member surrounding the conventional corner piece 112 in an unintended fashion, so that it has been sometimes difficult to maintain the quality, from the viewpoints of the shape and the strength.

The present invention is made in consideration of the above, and an object of the present invention is to provide a method for forming a composite material, and a composite material with which a high-quality corner can be formed appropriately.

### Solution to Problem

To solve the problems described above and achieve the object, a method according to the invention for forming a composite material is a method with the features of claim 1

With such a configuration, by forming the surrounding portion, and then forming the corner in a manner closing the through-hole formed by the surrounding portion, the corner and the surrounding portion can be formed separately, and the separately formed corner and surrounding portion can be integrated. Therefore, the corner can be formed without being affected by the surrounding portion, so that it is less likely for the corner to become wrinkled or spaced from, or to overlap with another member surrounding the corner. In this manner, the quality of the corner can be improved, and the high-quality corner can be formed appropriately.

In this configuration, it is preferable that a surrounding member preparing step of preparing a surrounding member for forming the surrounding portion is further included. With such a configuration, the freedom in the shape and the strength of the surrounding portion can be improved, and the qualities in the shape and the strength of the surrounding portion can be stabilized.

In these configurations, it is preferable that a corner member preparing step of preparing a corner member for forming the corner is further included. With such a configuration, the freedom in the shape and the strength of the corner can be improved, and the qualities in the shape and the strength of the corner can be stabilized.

In these configurations, the surrounding portion forming step may include placing a plurality of surrounding members as layers to form the surrounding portion, the corner forming step may include placing a corner member to form the corner, and the integrating step may include integrating the corner member and the surrounding members. Alternatively, in these configurations, the surrounding portion forming step may include placing a plurality of surrounding members as layers to form the surrounding portion, the corner forming step may include placing a plurality of corner members as layers to form the corner, and the integrating step may include integrating the layered corner members and the layered surrounding members. With such configurations, because a plurality of members are provided as layers, it is possible, in either one of the configurations, to further increase the freedom in the shape and the strength of the portion where the members are provided in layers, and to further stabilize the qualities in the shape and the strength of the portion where the members are provided as layers.

In these configurations, it is preferable that a boundary between the corner and the surrounding portion has a planar shape extending in a thickness direction of the composite material. With such a configuration, because the surrounding portion forming step and the corner forming step are simplified, the quality is stabilized.

In these configurations, it is preferable that a boundary between the corner and the surrounding portion is formed into a shape such that the surrounding portion is increased from an inner side toward an outer side of the composite material as the corner is decreased accordingly, or a shape such that the surrounding portion is decreased from the inner side toward the outer side of the composite material as the corner is increased accordingly. With such a configuration, the boundary between the corner and the surrounding portion has a larger area, and the shape of the boundary between the corner and the surrounding portion includes uneven portions. Therefore, the corner and the surrounding portion can be integrated more firmly.

It is preferable that a boundary between the corner and the surrounding portion is formed into a shape such that from an inner side toward an outer side of the composite material, a region in which the surrounding portion is increased as the corner is decreased is located alternatingly with a region in which the surrounding portion is decreased as the corner region is increased. With such a configuration, because the corner and the surrounding portion are engaged with each other, the corner and the surrounding portion can be integrated even more firmly.

In these configurations, it is preferable that the surrounding portion forming step includes placing a surrounding member at a position where the surrounding portion is to be formed in a mold for forming inside of the composite material, the corner forming step includes placing a corner member at a position where the corner is to be formed in the mold, and the mold is removed after the integrating step. With such a configuration, the composite material can be formed precisely based on the mold.

In these configurations, it is preferable that the composite material is obtained by impregnating reinforced fibers with thermosetting resin, the thermosetting resin takes a softened state, a hardened state, and a semi-hardened state, the surrounding portion forming step and the corner forming step include bringing the thermosetting resin included in at least one of the surrounding portion and the corner into the softened state or the semi-hardened state, and the integrating step includes bringing the thermosetting resin into the hardened state. With such a configuration, the corner and the surrounding portion can be integrated firmly by causing the thermosetting resin to transit to a hardened state.

In the configuration that the composite material is obtained by impregnating reinforced fibers with thermosetting resin, it is preferable that the thermosetting resin with which the surrounding portion is impregnated is of a same type as the thermosetting resin with which the corner is impregnated, and the integrating step includes integrating the thermosetting resin with which the surrounding portion is impregnated and the thermosetting resin with which the corner is impregnated. With such a configuration, the corner and the surrounding portion can be integrated more firmly by causing the thermosetting resin to transit to a hardened state.

In the configuration that the composite material is obtained by impregnating reinforced fibers with thermosetting resin, a surrounding member for forming the surrounding portion may include the reinforced fibers, and a corner member for forming the corner may not include the reinforced fibers. Alternatively, a surrounding member for forming the surrounding portion may include the reinforced fibers, and a corner member for forming the corner may include the reinforced fibers. With these configurations, the freedom in the shapes and the strengths of the corner and the surrounding portion can be improved, and the qualities in the shapes and the strengths of the corner and the surrounding portion can be stabilized, in either one of the configurations.

In these configurations, it is preferable that the corner has an inlet that passes through the composite material. With such a configuration, liquid or the like can be introduced to or discharged from the internal space of the composite material via the inlet.

To solve the problems described above and achieve the object, a composite material according to the invention is a composite material with the features of claim 15 having a corner. The composite material is obtained by impregnating reinforced fibers with thermosetting resin, and includes the corner that does not include any reinforced fibers, and a surrounding portion that includes reinforced fibers and surrounds the corner.

With such a configuration, on the basis of the condition of the reinforced fibers included in the composite material, by forming the surrounding portion, and then forming the corner in a manner closing the through-hole formed by the surrounding portion, the corner and the surrounding portion are formed separately, and the separately formed corner and surrounding portion are integrated with each other. In this manner, the corner is formed without being affected by the surrounding portion. Hence, it is less likely for the corner to become wrinkled or spaced from, or to overlap with another member surrounding the corner. In this manner, the quality of the corner is improved, so that the high-quality corner can be included appropriately.

In this configuration, it is preferable that a fiber-disrupted interface that is an interface on which continuity of the reinforced fibers included in the surrounding portion is lost and disrupted has a planar shape extending in a thickness direction of the composite material. With such a configuration, the composite material can be formed easily, so that the quality is stabilized.

Alternatively, in this configuration, it is preferable that a fiber-disrupted interface that is an interface on which continuity of the reinforced fibers included in the surrounding portion is lost and disrupted is formed into a shape such that the surrounding portion is increased from an inner side toward an outer side of the composite material as the corner is decreased accordingly, or a shape such that the surrounding portion is decreased from the inner side toward the outer side of the composite material as the corner is increased accordingly. With such a configuration, the boundary between the corner and the surrounding portion has a larger area, and the shape of boundary between the corner and the surrounding portion includes uneven portions. Therefore, the corner and the surrounding portion can be integrated more firmly.

Alternatively, in this configuration, it is preferable that a fiber-disrupted interface that is an interface on which continuity of the reinforced fibers included in the surrounding portion is lost and disrupted is formed into a shape such that from an inner side toward an outer side of the composite material, a region in which the surrounding portion is increased as the corner is decreased is located alternatingly with a region in which the surrounding portion is decreased as the corner region is increased. With such a configuration, because the corner and the surrounding portion are engaged with each other, the corner and the surrounding portion can be integrated even more firmly.

### Advantageous Effects of Invention

According to the present invention, a method for forming a composite material, and a composite material capable of forming a high-quality corner appropriately can be provided.

### Brief Description of Drawings

FIG. 1 is a schematic of a configuration of a composite material according to a first embodiment.
FIG. 2 is a schematic cross-sectional view of the composite material according to the first embodiment.
FIG. 3 is a flowchart illustrating a method for forming a composite material according to the first embodiment.
FIG. 4 is a schematic of a configuration of a surrounding member for forming the composite material according to the first embodiment.
FIG. 5 is a schematic of a configuration of a corner member for forming the composite material according to the first embodiment.
FIG. 6 is a schematic of a configuration illustrating one condition in the method for forming a composite material according to the first embodiment.
FIG. 7 is a schematic cross-sectional view of a composite material according to a second embodiment.
FIG. 8 is a schematic of a configuration of a corner member for forming the composite material according to the second embodiment.
FIG. 9 is another schematic of the configuration of the corner member for forming the composite material according to the second embodiment.
FIG. 10 is a schematic cross-sectional view of a composite material according to a third embodiment.
FIG. 11 is a schematic cross-sectional view of a composite material according to a fourth embodiment.
FIG. 12 is a schematic of the conventional composite material formed by the conventional method for forming a composite material.
FIG. 13 is a schematic of the conventional member that is used as a member for forming the conventional composite material illustrated in FIG. 12.

### Description of Embodiments

Some embodiments according to the present invention will now be explained in detail with reference to some drawings. The elements disclosed in the embodiments include those that can be easily replaceable by those skilled in the art, or those that are substantially the same. Furthermore, the element described below may be combined as appropriate.

### [First Embodiment]

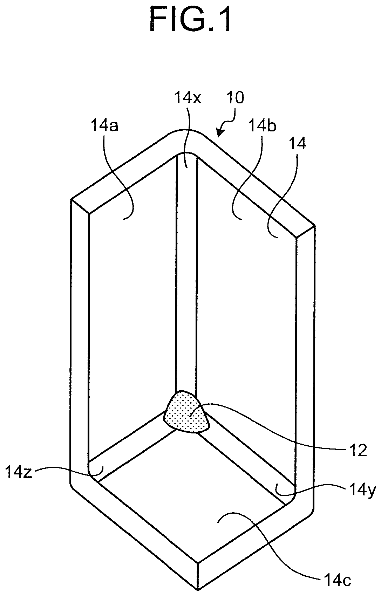

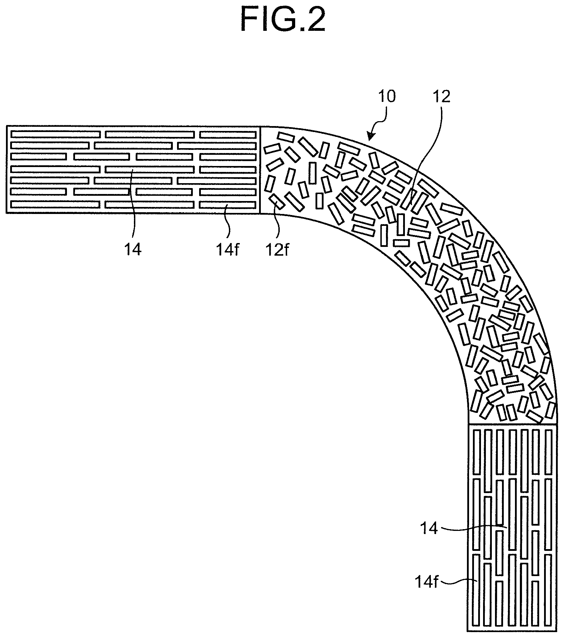

FIG. 1 is a schematic of a configuration of a composite material 10 according to a first embodiment. FIG. 2 is a schematic cross-sectional view of the composite material 10 according to the first embodiment. FIG. 2 is a cross-sectional view illustrating a cross section of the composite material 10 illustrated in FIG. 1, across a plane passing through a corner 12. The composite material 10 includes, as illustrated in FIGS. 1 and 2, a corner 12, and a surrounding portion 14 surrounding the corner 12. In FIG. 1, the reinforced fibers, which will be described later, included in the composite material 10 are not illustrated. Furthermore, for the purpose of explaining the embodiment, the reinforced fibers are illustrated in an extreme fashion in FIG. 2, but in reality, they are smaller in size, and are more finely entangled with one another, compared with those illustrated.

Explained herein as an example of the composite material 10 is a material used for aircrafts, automobiles, ships, or the like. Explained herein as an example of the composite material is a material including reinforced fibers for reinforcing the composite material, and resin with which the reinforced fibers are impregnated. An example of the reinforced fibers includes bundles of several hundred to several thousand basic fibers within a size of equal to or greater than 5 micrometers and equal to or smaller than 7 micrometers. An example of the basic fibers used for the reinforced fibers includes carbon fibers. However, without limitation thereto, the basic fibers used for the reinforced fibers may be fibers of another type, such as plastic fibers, glass fibers, or metal fibers.

Thermosetting resin is preferably used as the resin with which the reinforced fibers are impregnated, but a thermoplastic resin may also be used. An example of the thermosetting resin includes epoxy resin. Examples of the thermoplastic resin include polyether ether ketone (PEEK), polyether ketone ketone (PEKK), and polyphenylene sulfide (PPS). However, without limitation thereto, the resin with which the reinforced fibers are impregnated may also be another type of resin.

When the resin with which the reinforced fibers are impregnated is thermosetting resin, the thermosetting resin can take a softened state, a hardened state, and a semi-hardened state. The softened state is a state before the thermosetting resin is thermally set. The softened state is a state in which the thermosetting resin is not self-supporting, and in which the resin is not capable of maintaining its shape without the support of a supporting body. The softened state is a state in which the thermosetting resin is heated and allowed to go through a thermo-setting reaction. The hardened state is a state after the thermosetting resin has become thermally set. The hardened state is a state in which the thermosetting resin is self-supporting, and is capable of maintaining its shape without any support of a supporting body. The hardened state is a state in which the thermosetting resin cannot be caused to go through a thermo-setting reaction even by heating. The semi-hardened state is a state between the softened state and the hardened state. The semi-hardened state is a state in which the thermosetting resin has been thermally set by a degree less than that resulting in the hardened state. The semi-hardened state is a state in which the thermosetting resin is self-supporting, and is capable of maintaining its shape without any support of a supporting body. The semi-hardened state is a state in which the thermosetting resin can be caused to go through a thermo-setting reaction by heating. It is preferable for the composite material 10 that is obtained by impregnating the reinforced fibers with thermosetting resin to be a prepreg in which the thermosetting resin is in a semi-hardened state, or thermosetting resin in a hardened state.

The boundary between the corner 12 and the surrounding portion 14 has a planar shape extending in the thickness direction of the composite material 10. Specifically, the boundary has a planar shape extending in the direction perpendicularly intersecting with a flat surface formed by the surrounding portion 14 of the composite material 10.

The reinforced fibers in the composite material 10 include, as illustrated in FIG. 2, first reinforced fibers 12f and second reinforced fibers 14f. The corner 12 includes first reinforced fibers 12f. An example of the first reinforced fibers 12f includes isotropically distributed short fibers. The surrounding portion 14 includes the second reinforced fibers 14f. An example of the second reinforced fibers 14f includes fibers having a certain length or more, and arranged along one direction. The continuity between the first reinforced fibers 12f included in the corner 12 and the second reinforced fibers 14f included in the surrounding portion 14 is disrupted at the boundary between the corner 12 and the surrounding portion 14, and these two different fibers become discontinuous at this boundary. Because the corner 12 and the surrounding portion 14 are integrated, the boundary between the corner 12 and the surrounding portion 14 is unclear, unless a particular attention is payed to the first reinforced fibers 12f and the second reinforced fibers 14f.

A fiber-discontinuous interface in the composite material 10, that is, an interface on which the first reinforced fibers 12f and the second reinforced fibers 14f are discontinuous has a planar shape extending in the thickness direction of the composite material 10. Specifically, the fiber-discontinuous interface in the composite material 10 is formed by the boundary between the corner 12 and the surrounding portion 14. In other words, the fiber-discontinuous interface in the composite material 10 has a planar shape extending in the direction perpendicularly intersecting with a flat surface formed by the surrounding portion 14 of the composite material 10.

It is possible for the corner 12 not to include the reinforced fibers. When the corner 12 does not include any reinforced fibers, the continuity of the second reinforced fibers 14f included in the surrounding portion 14 is disrupted and becomes discontinuous at the boundary between the corner 12 and the surrounding portion 14. Because the corner 12 and the surrounding portion 14 are integrated, the boundary between the corner 12 and the surrounding portion 14 is unclear, unless a particular attention is paid to the reinforced fibers included in the surrounding portion 14.

When the corner 12 of the composite material 10 does not include any reinforced fibers, a fiber-disrupted interface that is an interface on which the continuity of the second reinforced fibers 14f are disrupted has a planar shape extending in the thickness direction of the composite material 10. Specifically, the fiber-disrupted interface in the composite material 10 is formed by the boundary between the corner 12 and the surrounding portion 14. In other words, the fiber-disrupted interface in the composite material 10 has a planar shape extending in the direction perpendicularly intersecting with a flat surface formed by the surrounding portion 14 of the composite material 10.

The surrounding portion 14 includes, as illustrated in FIG. 1, a first face portion 14a, a second face portion 14b, a third face portion 14c, a first face-connecting portion 14x, a second face-connecting portion 14y, and a third face-connecting portion 14z. The first face-connecting portion 14x is located along the line where the first face portion 14a and the second face portion 14b intersect with each other, and serves to smooth out the curve between the first face portion 14a and the second face portion 14b. The second face-connecting portion 14y is located along the line where the second face portion 14b and the third face portion 14c intersect with each other, and serves to smooth out the curve between the second face portion 14b and the third face portion 14c. The third face-connecting portion 14z is located along the line where the third face portion 14c and the first face portion 14a intersect with each other, and serves to smooth out the curve between the third face portion 14c and the first face portion 14a.

The surrounding portion 14 includes the first face portion 14a, the second face portion 14b, and the third face portion 14c that intersect with one another. The corner 12 is provided at the position where the first face portion 14a, the second face portion 14b, the third face portion 14c of the surrounding portion 14 intersect with one another. Without limitation to three, it is preferable for the surrounding portion 14 to include a plurality of faces, that is, at least three or more faces that intersect with one another. Not according to the invention as claimed the surrounding portion 14 may also include two curved faces, or may include one curved face, as the side surface of a cone. Also, in these configurations, the corner 12 is provided to the position where the curved faces included in the surrounding portion 14 intersect each other.

The corner 12 is a trihedral angle that is located where the first face portion 14a, the second face portion 14b, and the third face portion 14c intersect with one another. The corner 12 has a smooth curved surface that is continuously connected to the first face portion 14a, the second face portion 14b, and the third face portion 14c. Without limitation thereto, it is preferable for the corner 12 to have a smooth curved surface that is provided at the position of the intersection among a plurality of faces including at least three or more faces intersecting with one another, and that is continuously connected to such faces. Not according to the invention as claimed the corner 12 may also be provided to a position where two curved faces intersect with each other, or may be provided to a position where one curved face intersects with itself, an example of which is the apex of a cone. The corner 12 is a pointed portion projecting with respect to the surrounding portion, in a fashion what is called three-dimensionally.

Because the composite material 10 is configured in a manner described above, the condition of the reinforced fibers included in the composite material 10 is discontinuous, e.g., the first reinforced fibers 12f included in the corner 12 are discontinuous to the second reinforced fibers 14f included in the surrounding portion 14. Therefore, by forming the surrounding portion 14, and then forming the corner 12 in a manner closing the through-hole formed by the surrounding portion 14, the corner 12 and the surrounding portion 14 are formed separately, and the separately formed corner 12 and surrounding portion 14 are then integrated with each other. Therefore, in the composite material 10, the corner 12 is formed without being affected by the surrounding portion 14, so it is less likely for the corner 12 to become wrinkled or spaced from, or to overlap with the surrounding portion 14 in an unintended fashion. In this manner, with the composite material 10, the quality of the corner 12 is improved, and the high-quality corner 12 can be included appropriately.

Furthermore, in the composite material 10, even when the corner 12 has a trihedral angle that is highly likely to form an acute angle, the corner 12 is formed without being affected by the surrounding portion 14. Therefore, the quality of the corner 12 is improved, and the high-quality corner 12 can be included appropriately.

Because the fiber-discontinuous interface or the fiber-disrupted interface of the composite material 10 has a planar shape extending in the thickness direction of the composite material 10, a method for forming the composite material 10, which will be described later, can be simplified, so that the quality is stabilized.

In the composite material 10, it is preferable for a flat surface of the surrounding portion 14 extending from the surrounding portion 14 toward the corner 12 to be smoothly connected with a curved surface of the surrounding portion 14, at the boundary between the corner 12 and the surrounding portion 14, and for the boundary to be located on the flat surface. In other words, the corner 12 may include a part located on the extension of the flat surface of the surrounding portion 14. In such a case, because the boundary portion between the surrounding portion 14 and the corner 12 is not bent, the quality of the surrounding portion 14 is improved, and the high-quality surrounding portion 14 can be included appropriately.

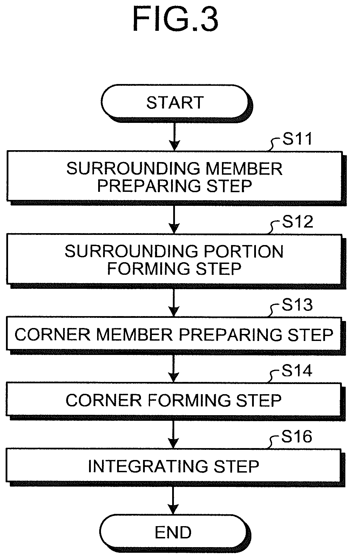

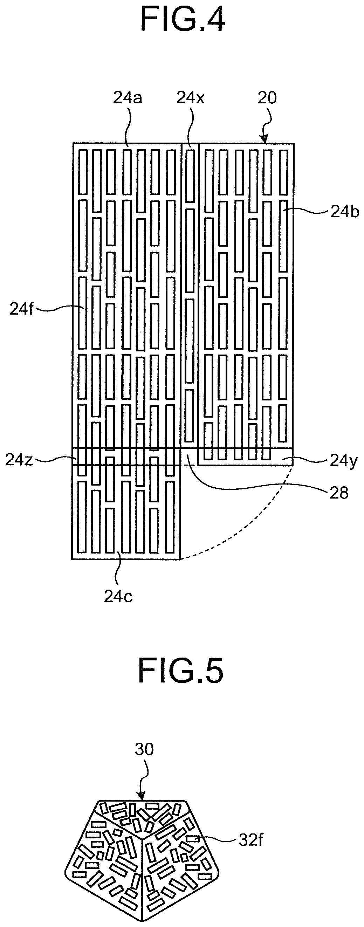

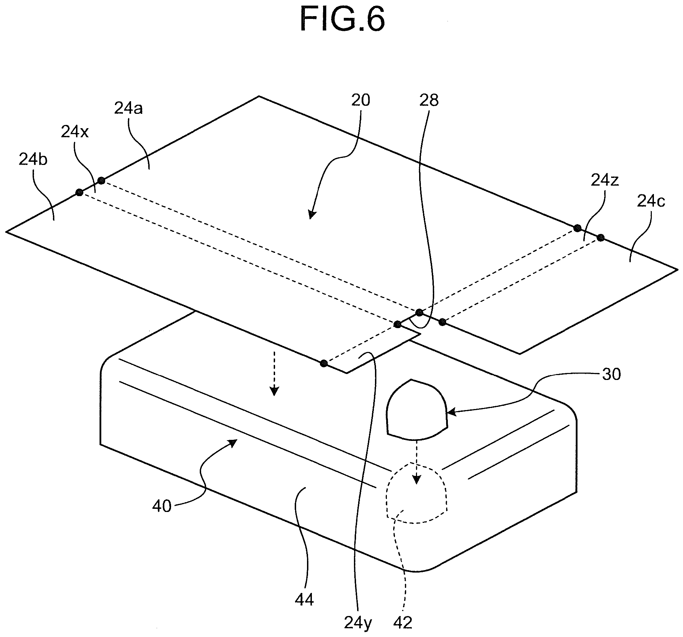

FIG. 3 is a flowchart illustrating a method for forming the composite material 10 according to the first embodiment. FIG. 4 is a schematic of a configuration of a surrounding member 20 for forming the composite material 10 according to the first embodiment. FIG. 5 is a schematic of a configuration of the corner member 30 for forming the composite material 10 according to the first embodiment. FIG. 6 is a schematic of a configuration illustrating one condition in the method for forming the composite material 10 according to the first embodiment. For the purpose of explaining the embodiment, the reinforced fibers are illustrated in an extreme fashion in FIGS. 4 and 5, but in reality, they are smaller in size, and are more finely entangled with one another, compared with those illustrated, in the same manner as in FIG. 2. Furthermore, in FIG. 6, the reinforced fibers included in the composite material 10 are not illustrated, in the same manner as in FIG. 1. The method for forming the composite material 10 according to the first embodiment will now be explained with reference to FIGS. 3 to 6. The method for forming the composite material 10 includes, as illustrated in FIG. 3, a surrounding portion forming step (Step S12), a corner forming step (Step S14), and an integrating step (Step S16).

It is preferable for the method for forming the composite material 10 to further include, as illustrated in FIG. 3, a surrounding member preparing step (Step S11) of preparing the surrounding member 20 for forming the surrounding portion 14, before the surrounding portion forming step (Step S12). It is also preferable for the method for forming the composite material 10 to further include, as illustrated in FIG. 3, a corner member preparing step (Step S13) of preparing the corner member 30 for forming the corner 12, before the corner forming step (Step S14).

The surrounding member 20 is a composite material having an expanded shape of the surrounding portion 14, and, favorably used for the surrounding member 20 is a unidirectional (UD) material in which the reinforced fibers are arranged along one direction. The surrounding member 20 includes, as illustrated in FIG. 4, a first face member 24a, a second face member 24b, a third face member 24c, a first face-connecting member 24x, a second face-connecting member 24y, and a third face-connecting member 24z. The surrounding member 20 also includes second reinforced fibers 24f. The first face member 24a, the second face member 24b, the third face member 24c, the first face-connecting member 24x, the second face-connecting member 24y, and the third face-connecting member 24z correspond to the first face portion 14a, the second face portion 14b, the third face portion 14c, the first face-connecting portion 14x, the second face-connecting portion 14y, and the third face-connecting portion 14z, respectively. The second reinforced fibers 24f correspond to the second reinforced fibers 14f. The surrounding member 20 also has a gap 28 in the area surrounded by the first face member 24a, the second face member 24b, and the third face member 24c. The gap 28 is provided correspondingly to the position of the corner 12.

The surrounding member 20 is prepared by impregnating the second reinforced fibers 24f with resin, and molding the resin-impregnated fibers (Step S11). When thermosetting resin is used as the resin, it is preferable for the thermosetting resin included in surrounding member 20 to be in a softened state, or to be a prepreg which is thermosetting resin in a semi-hardened state. In such a case, by causing the thermosetting resin to transit to a hardened state at the integrating step (Step S16), which will be described later, the corner 12 and the surrounding portion 14 that is made from the surrounding member 20 can be integrated more firmly.

The corner member 30 is a cap member including first reinforced fibers 32f, as illustrated in FIG. 5. The corner member 30 is prepared by impregnating the first reinforced fibers 32f with resin, and molding the resin-impregnated fibers (Step S13). At Step S13, the corner member 30 is prepared by molding, examples of which include injection molding in which a short-fiber material including the first reinforced fibers 32f are injection-molded, drape forming in which a prepreg of a short-fiber material including the first reinforced fibers 32f are pre-formed, or resin transfer molding (RTM) in which a short-fiber dried base material including the first reinforced fibers 32f are molded and impregnated with resin, for example. When thermosetting resin is used as the resin, it is preferable for the thermosetting resin included in the corner member 30 to be in a softened state, or to be a prepreg which is thermosetting resin in a semi-hardened state. In such a case, by causing the thermosetting resin to transit to a hardened state at the integrating step (Step S16), which will be described later, the surrounding portion 14 and the corner 12 that is made from the corner member 30 can be integrated more firmly.

The corner member 30 may also be a cap member not including the first reinforced fibers 32f. In such a case, the corner member 30 is prepared by molding only resin (Step S13).

In the method for forming the composite material 10, it is preferable to use a mold 40 for molding the corner 12 and the surrounding portion 14 of the composite material 10 from the inside of the composite material 10, that is, from the side opposite to the side on which the corner 12 projects. The mold 40 includes, as illustrated in FIG. 6, a corner forming section 42 that is the portion for forming the corner 12, and a surrounding portion forming section 44 that is the portion for forming the surrounding portion 14. The mold 40 is made of a material that is hard enough not to become deformed by the pressure applied in the method for forming the composite material 10, and is heat-resistant enough not to become melt or deformed by the heat applied in the method for forming the composite material 10. Furthermore, the mold 40 is also made of a material that is not joined with the members for forming the surrounding portion 14 and the corner 12, e.g., the surrounding member 20 and the corner member 30.

When the mold 40 is used in the method for forming the composite material 10, the surrounding member 20 is placed on the surrounding portion forming section 44, and bent in such a manner that a through-hole that is the gap 28 before the corner 12 is formed, and that the surrounding portion 14 is formed around the through-hole (Step S12). The surrounding member 20 is bent along the lines between the first face member 24a and the first face-connecting member 24x, between the first face-connecting member 24x and the second face member 24b, between the second face member 24b and the second face-connecting member 24y, between the first face member 24a and the third face-connecting member 24z, and between the third face-connecting member 24z and the third face member 24c, in such a manner that the second face-connecting member 24y and the third face member 24c are brought into contact with each other.

At Step S12, one surrounding member 20 may be placed on the surrounding portion forming section 44, or a plurality of surrounding members 20 may be placed as layers on the surrounding portion forming section 44. When a plurality of surrounding members 20 are to be placed as layers, the thermosetting resin included in the surrounding members 20 is kept in a softened state or semi-hardened state, or an adhesive or the like for bonding the surrounding members 20 is applied between the surrounding members 20 while the thermosetting resin included in the surrounding member 20 is in a hardened state.

At Step S12, the first face member 24a, the second face member 24b, the third face member 24c, the first face-connecting member 24x, the second face-connecting member 24y, and the third face-connecting member 24z come to serve as members that make up the first face portion 14a, the second face portion 14b, the third face portion 14c, the first face-connecting portion 14x, the second face-connecting portion 14y, and the third face-connecting portion 14z, respectively. The second reinforced fibers 24f come to serve as the second reinforced fibers 14f at Step S12.

When the mold 40 is used in the method for forming the composite material 10, by placing the corner member 30 at the corner forming section 42, the through-hole at the gap 28 is closed by the corner member 30, and the corner 12 is formed (Step S14). When the thermosetting resin included in the surrounding member 20 is in a hardened state, the thermosetting resin included in the corner member 30 is kept a softened state or a semi-hardened state, or an adhesive or the like for bonding the corner member 30 and the surrounding member 20 is applied between the corner member 30 and the surrounding member 20. At Step S14, the corner member 30 comes to serve as a member making up the corner 12. When the first reinforced fibers 32f are included in the corner member 30, the first reinforced fibers 32f come to serve as the first reinforced fibers 12f at Step S14.

The method for forming the composite material 10 is not limited to the execution in the order in which the process of Step S14 being performed after the process at Step S12 is performed. For example, the process at Step S12 may be performed after the process at Step S14 is performed, or the process at Step S12 may be performed alternatingly with the process at Step S14. Furthermore, the process at Step S12 and the process at Step S14 may be performed simultaneously. Furthermore, the method for forming the composite material 10 is not limited to the execution in the order of Step S11, Step S12, Step S13, and Step S14. As long as Step S11 is performed before Step S12, and Step S13 is performed before Step S14, these steps may be performed in any order.

The surrounding portion 14 formed at Step S12 and the corner 12 formed at Step S14 are pressed and heated so that the surrounding portion 14 and the corner 12 are integrated with each other (Step S16). By integrating the corner 12 and the surrounding portion 14, the gap between the corner 12 and the surrounding portion 14 is eliminated. When the mold 40 is used in the method for forming the composite material 10, the corner 12 and the surrounding portion 14 are pressed from inside by the mold 40, and from outside, that is, the side to which the corner 12 projects, via a sheet using a weight or a press. While being pressed, the corner 12 and the surrounding portion 14 are heated with a heater or the like from inside and outside. In this manner, the thermosetting resin having been in a softened state or a semi-hardened state transits to a hardened state, for example, and the corner 12 and the surrounding portion 14 are integrated. After the corner 12 and the surrounding portion 14 are integrated, that is, after Step S16, the mold 40 is removed, and the finished composite material 10 is acquired.

The first face member 24a, the second face member 24b, the third face member 24c, the first face-connecting member 24x, the second face-connecting member 24y, and the third face-connecting member 24z come to serve as the first face portion 14a, the second face portion 14b, the third face portion 14c, the first face-connecting portion 14x, the second face-connecting portion 14y, and the third face-connecting portion 14z, respectively, as a result of Step S16. The corner member 30 comes to serve as the corner 12 at Step S16.

When the first reinforced fibers 32f are included in the corner member 30, the fiber-discontinuous interface on which the first reinforced fibers 12f and the second reinforced fibers 14f become discontinuous comes to have a planar shape extending in the thickness direction of the composite material 10, as a result of Step S16. In other words, the fiber-discontinuous interface comes to have a planar shape extending in the direction perpendicularly intersecting with a flat surface of the surrounding portion 14 of the composite material 10, as a result of Step S16.

When the first reinforced fibers 32f are not included in the corner member 30, the fiber-disrupted interface that is an interface on which the continuity of the second reinforced fibers 14f are lost and disrupted comes to have a planar shape extending in the thickness direction of the composite material 10, as a result of Step S16. In other words, this fiber-disrupted interface comes to have a planar shape extending in the direction perpendicularly intersecting with a flat surface of the surrounding portion 14 of the composite material 10, as a result of Step S16.

Because the method for forming the composite material 10 is configured in a manner described above, it is possible to form the surrounding portion 14, and to form the corner 12 in a manner closing the through-hole formed by the surrounding portion 14. Therefore, it is possible to form the corner 12 and the surrounding portion 14 separately, and to integrate the separately formed corner 12 and the surrounding portion 14. Therefore, with the method for forming the composite material 10, because the corner 12 can be formed without being affected by the surrounding portion 14, it is less likely for the corner 12 to become wrinkled or spaced from, or to overlap with the surrounding portion 14 in an unintended fashion. In the manner described above, with the method for forming the composite material 10, the quality of the corner 12 can be improved, and the high-quality corner 12 can be formed appropriately.

The method for forming the composite material 10 further includes the surrounding member preparing step (Step S11) of preparing the surrounding member 20 for forming the surrounding portion 14. Therefore, the freedom in the shape and the strength of the surrounding portion 14 can be improved, and the qualities in the shape and the strength of the surrounding portion 14 can be stabilized. Furthermore, the method for forming the composite material 10 also includes the corner member preparing step (Step S13) of preparing the corner member 30 for forming the corner 12. Therefore, the freedom in the shape and the strength of the corner 12 can be improved, and the qualities in the shape and the strength of the corner 12 can be stabilized.

In the method for forming the composite material 10, a plurality of surrounding members 20 for forming the surrounding portion 14 are placed as layers at the surrounding portion forming step (Step S12), and the corner member 30 for forming the corner 12 is placed at the corner forming step (Step S14). At the integrating step (Step S16), the corner members 30 and the surrounding members 20 are integrated. Therefore, with the method for forming the composite material 10, the freedom in the shape and the strength of the surrounding portion 14 formed by layering the members can be improved further, and hence, the qualities in the shape and the strength of the surrounding portion 14 formed by layering the members can be further improved.

In the method for forming the composite material 10, the mold 40 is used, and the surrounding member 20 is placed on the surrounding portion forming section 44 at the surrounding portion forming step (Step S12), and the corner member 30 is placed on the corner forming section 42 at the corner forming step (Step S14). After the integrating step (Step S16), the mold 40 is removed. Therefore, with the method for forming the composite material 10, the composite material 10 can be formed precisely, based on the mold 40.

In the method for forming the composite material 10, the surrounding portion 14 includes a plurality of faces that are at least three or more faces intersecting with one another, and such faces are achieved by bending a composite material that is the surrounding member 20 for forming the surrounding portion 14 having the expanded shape of the surrounding portion 14. The corner 12 is located where the faces intersect with one another, and has a smooth curved surface that is continuously connected to these faces. Therefore, with the method for forming the composite material 10, even when the corner 12 has a trihedral angle that is highly likely to form an acute angle, the corner 12 can be formed without being affected by the surrounding portion 14. Therefore, the quality of the corner 12 can be improved, and the high-quality corner 12 can be formed appropriately.

In the method for forming the composite material 10, the composite material 10 is obtained by impregnating the reinforced fibers with thermosetting resin, and the thermosetting resin takes a softened state, a hardened state, and a semi-hardened state. At the surrounding portion forming step (Step S12) and the corner forming step (Step S14), the thermosetting resin included in at least one of the surrounding portion 14 and the corner 12 is kept in a softened state or a semi-hardened state, and the thermosetting resin is in a hardened state at the integrating step (Step S16). As a result, the surrounding portion 14 and the corner 12 are integrated. Therefore, the method for forming the composite material 10 can integrate the corner 12 and the surrounding portion 14 firmly, by causing the thermosetting resin to transit to a hardened state.

In the method for forming the composite material 10, the composite material 10 includes reinforced fibers impregnated with thermosetting resin, and the resin with which the surrounding portion 14 is impregnated is of the same type as the resin with which the corner 12 is impregnated. It is more preferable for the resin with which the surrounding portion 14 is impregnated to become integrated with the resin with which the corner 12 is impregnated, at the integrating step (Step S16). In such a case, in the method for forming the composite material 10, the corner 12 and the surrounding portion 14 can be integrated more firmly by causing the thermosetting resin to transit to a hardened state.

In the method for forming the composite material 10, the composite material 10 may include the reinforced fibers impregnated with thermosetting resin; the corner member 30 for forming the corner 12 may include the first reinforced fibers 32f; and the surrounding member 20 for forming the surrounding portion 14 may include the second reinforced fibers 24f. Furthermore, in the method for forming the composite material 10, the composite material 10 may include the reinforced fibers impregnated with thermosetting resin; the surrounding member 20 for forming the surrounding portion 14 may include the reinforced fibers; and the corner member 30 for forming the corner 12 may not include the reinforced fibers. Therefore, with the method for forming the composite material 10, and the freedom in the shapes and the strengths of the surrounding portion 14 and the corner 12 can be improved, and the qualities in shapes and strengths of the corner 12 and the surrounding portion 14 can be stabilized.

In the method for forming the composite material 10, the fiber-discontinuous interface or the fiber-disrupted interface of the composite material 10 has a planar shape extending in the thickness direction of the composite material 10. In this manner, with the method for forming the composite material 10, the surrounding portion forming step (Step S12) and the corner forming step (Step S14) can be simplified, so that the quality is stabilized.

In the method for forming the composite material 10, it is preferable for the flat surface of the surrounding portion 14 extending from the surrounding portion 14 toward the corner 12 to be smoothly connected with the curved surface of the surrounding portion 14, at the boundary between the surrounding portion 14 and the corner 12, and for the boundary between the corner 12 and the surrounding portion 14 of the composite material 10 to be located in the flat surface. In other words, the corner 12 may include a part located on the extension of the flat surface of the surrounding portion 14. In such a case, with the method for forming the composite material 10, because the boundary portion between the surrounding portion 14 and the corner 12 is not bent, the quality of the surrounding portion 14 can be improved, and the high-quality surrounding portion 14 can be formed appropriately.

### [Second Embodiment]

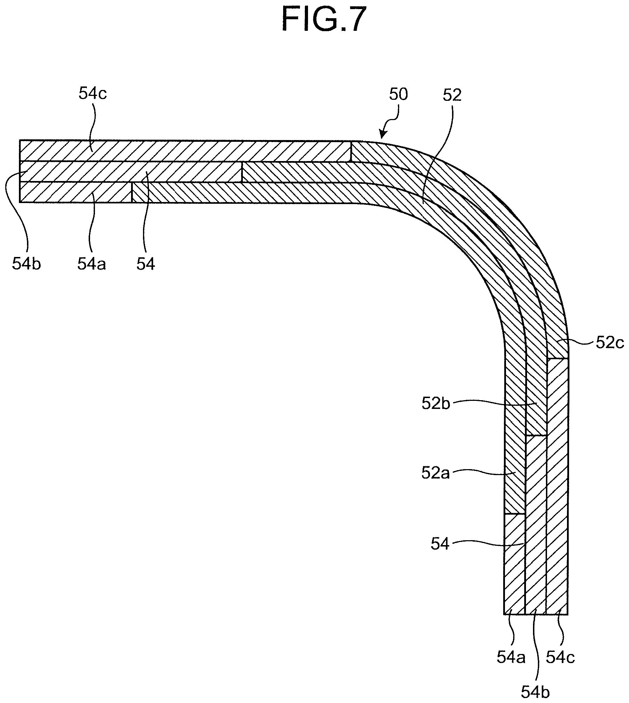

FIG. 7 is a schematic cross-sectional view of a composite material 50 according to a second embodiment. FIG. 7 is a cross-sectional view illustrating a cross section along a cross-sectional direction corresponding to the cross-sectional direction in FIG. 2, that is, across a plane passing through a corner 52 of the composite material 50. In FIG. 7, the reinforced fibers included in the composite material 50 are not illustrated, in the same manner as in FIGS. 1 and 6. The composite material 50 is equivalent to the composite material 10 with a change in the shape of the boundary between the corner 12 and the surrounding portion 14, from a planar shape extending in the thickness direction of the composite material 10 to a stair-like shape. In the explanation of the second embodiment, the structures that are the same as those in the first embodiment are assigned with the same reference signs as those in the first embodiment, and detailed explanations thereof will be omitted.

The composite material 50 includes, as illustrated in FIG. 7, a corner 52, and a surrounding portion 54 surrounding the corner 52. The composite material 50 is explained to be the same material as the composite material 10. In other words, the material of the corner 52 is explained to be the same material as that of the corner 12 as an example, and the surrounding portion 54 is explained to be the same material as that of the surrounding portion 14, as an example. The relation between the reinforced fibers included in the corner 52 and those included in surrounding portion 54 are the same as that between the reinforced fibers included in the corner 12 and those included in the surrounding portion 14.

The composite material 50 includes three layers in the thickness direction. More specifically, the first layer of the composite material 50 includes a first corner layer 52a and a first surrounding portion layer 54a. The second layer of the composite material 50 includes a second corner layer 52b and a second surrounding portion layer 54b. The third layer of the composite material 50 includes a third corner layer 52c and a third surrounding portion layer 54c. The corner 52 includes three layers in the thickness direction of the composite material 50, and includes the first corner layer 52a, the second corner layer 52b, and the third corner layer 52c. The surrounding portion 54 includes three layers in the thickness direction of the composite material 50, and includes the first surrounding portion layer 54a, the second surrounding portion layer 54b, and the third surrounding portion layer 54c.

In the first layer of the composite material 50, the first corner layer 52a extends toward the first surrounding portion layer 54a by a large extent. In the second layer of the composite material 50, the second corner layer 52b extends toward the second surrounding portion layer 54b by a smaller extent. In the third layer of the composite material 50, the third corner layer 52c does not extend toward the third surrounding portion layer 54c. The extents by which the first corner layer 52a, the second corner layer 52b, and the third corner layer 52c extend toward the first surrounding portion layer 54a, the second surrounding portion layer 54b, and the third surrounding portion layer 54c, respectively, become smaller in the order described herein.

The boundary between the corner 52 and the surrounding portion 54 is formed in such a manner that the area occupied by the surrounding portion 54 is monotonically increased, and the area occupied by the corner 52 is monotonically decreased accordingly, from the inner side toward the outer side of the composite material 50. Specifically, the boundary between the corner 52 and the surrounding portion 54 is formed in a three-step stair-like shape so that the area of the surrounding portion 54 is monotonically increased, and the area occupied by the corner 52 is monotonically decreased accordingly, from the inner side toward the outer side of the composite material 50. In other words, the boundary between the corner 52 and the surrounding portion 54 has a three-step stair-like shape in the thickness direction of the composite material 50.

The first step in the boundary between the corner 52 and the surrounding portion 54 is formed by an interface between the first corner layer 52a and the first surrounding portion layer 54a, and a touching surface between the first corner layer 52a and the second surrounding portion layer 54b. The second step in the boundary between the corner 52 and the surrounding portion 54 is formed by an interface between the second corner layer 52b and the second surrounding portion layer 54b, and a touching surface between the second corner layer 52b and the third surrounding portion layer 54c. The third step in the boundary between the corner 52 and the surrounding portion 54 is formed by an interface between the third corner layer 52c and the third surrounding portion layer 54c. Because the corner 52 and the surrounding portion 54 are integrated, the boundary between the corner 52 and the surrounding portion 54 is unclear, in the same manner as the boundary between the corner 12 and the surrounding portion 14.

In the composite material 50, the fiber-discontinuous interface on which the first reinforced fibers included in the corner 52 and the second reinforced fibers included in the surrounding portion 54 become discontinuous is formed in such a manner that the area of the surrounding portion 54 is monotonically increased, and the area occupied by the corner 52 is monotonically decreased accordingly, from the inner side toward the outer side of the composite material 50. Specifically, the fiber-discontinuous interface in the composite material 50 is formed by the boundary between the corner 52 and the surrounding portion 54. In other words, the fiber-discontinuous interface in the composite material 50 has a three-step stair-like shape.

In the composite material 50, when the corner 52 does not include any reinforced fibers, the fiber-disrupted interface that is an interface on which the continuity of the second reinforced fibers is lost and disrupted is formed in such a manner that the area of the surrounding portion 54 is monotonically increased, and the area occupied by the corner 52 is monotonically decreased accordingly, from the inner side toward the outer side of the composite material 50, in the same manner as the fiber-discontinuous interface. Specifically, the fiber-disrupted interface in the composite material 50 is formed by the boundary between the corner 52 and the surrounding portion 54, in the same manner as in fiber-discontinuous interface. In other words, fiber-disrupted interface in the composite material 50 has a three-step stair-like shape.

The boundary between the corner 52 and the surrounding portion 54 together forming the fiber-discontinuous interface or the fiber-disrupted interface in the composite material 50 is not limited thereto, and the boundary may be formed in such a manner that the area occupied by the surrounding portion 54 is monotonically decreased, and the area of the corner 52 is monotonically increased accordingly, from the inner side toward the outer side of the composite material 50. Furthermore, when the boundary between the corner 52 and the surrounding portion 54 is provided with a stair-like shape, the number of steps included in the stair-like shape is not limited to three, and may be two, or four or more. Furthermore, the boundary between the corner 52 and the surrounding portion 54 is not limited to a stair-like shape, but may also be a tapered shape.

Because the composite material 50 is configured in a manner described above, on the basis of the condition of the reinforced fibers included in the composite material 50, by forming the surrounding portion 54, and then forming the corner 52 in a manner closing the through-hole formed by the surrounding portion 54, in the same manner as in the composite material 10, the corner 52 and the surrounding portion 54 are formed separately, and the corner 52 and the surrounding portion 54 that are separately formed are integrated with each other. Therefore, in the composite material 50, the corner 52 is formed without being affected by the surrounding portion 54, so that the quality of the corner 52 is improved, and the high-quality corner 52 can be included appropriately. Furthermore, the composite material 50 can achieve the same advantageous effects as those achieved by the other composite material 10.

In the composite material 50, the boundary between the corner 52 and the surrounding portion 54 is formed in such a manner that the area occupied by the surrounding portion 54 is monotonically increased, and the area occupied by the corner 52 is monotonically decreased accordingly, from the inner side toward the outer side of the composite material 50, in a three-step stair-like shape. Therefore, the boundary between the corner 52 and the surrounding portion 54 has a larger area, and the shape of the boundary between the corner 52 and the surrounding portion 54 includes uneven portions. Hence, the corner 52 and the surrounding portion 54 can be integrated more firmly. In the composite material 50, the area by which the corner 52 and the surrounding portion 54 is brought into contact is also increased, even when the boundary between the corner 52 and the surrounding portion 54 has any other shape described above. Therefore, the corner 52 and the surrounding portion 54 can be integrated more firmly.

A method for forming the composite material 50 includes the surrounding portion forming step (Step S12), the corner forming step (Step S14), and the integrating step (Step S16), in the same manner as the method for forming the composite material 10.

It is preferable for the method for forming the composite material 50 to further include the surrounding member preparing step (Step S11) of preparing the surrounding member 20 for forming the surrounding portion 54, in the same manner as in the method for forming the composite material 10. When the surrounding member 20 for forming the surrounding portion 54 is prepared at separate steps of forming the first surrounding portion layer 54a, for forming the second surrounding portion layer 54b, and for forming the third surrounding portion layer 54c, the resultant gaps 28 have different sizes and shapes, correspondingly to the first corner layer 52a, the second corner layer 52b, and the third corner layer 52c, respectively. It is also possible to prepare the surrounding member 20 for forming the surrounding portion 54 as one unit.

Step S12 in the method for forming the composite material 50 is equivalent to Step S12 in the method for forming the composite material 10 with a change in the surrounding member 20 to be placed and bent, changed correspondingly to the first surrounding portion layer 54a, the second surrounding portion layer 54b, and the third surrounding portion layer 54c. At Step S12 in the method for forming the composite material 50, when the surrounding member 20 is prepared as one unit, the surrounding member 20 is placed and bent on the surrounding portion forming section 44. At Step S12 in the method for forming the composite material 50, when the surrounding member 20 is prepared at separate steps, the surrounding member 20 corresponding to the first surrounding portion layer 54a, the surrounding member 20 corresponding to the second surrounding portion layer 54b, and the surrounding member 20 corresponding to the third surrounding portion layer 54c are placed and bent on the surrounding portion forming section 44, in the order described herein.

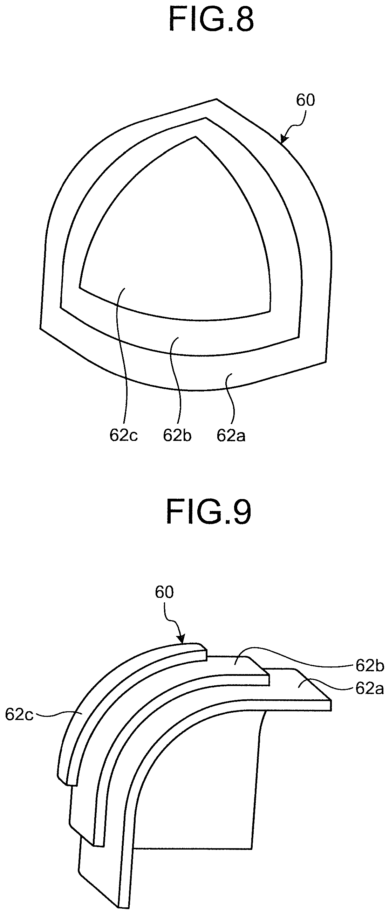

FIG. 8 is a schematic of a configuration of a corner member 60 for forming the composite material 50 according to the second embodiment. FIG. 9 is another schematic of the configuration of the corner member 60 for forming the composite material 50 according to the second embodiment. In FIGS. 8 and 9, the reinforced fibers included in the corner member 60 are not illustrated, in the same manner as in FIGS. 1, 6, and 7. It is preferable for the method for forming the composite material 50 to further include a corner member preparing step of preparing the corner member 60 for forming the corner 52 (Step S13), in the same manner as in the method for forming the composite material 10.

The corner member 60 includes, as illustrated in FIGS. 8 and 9, a first corner member layer 62a, a second corner member layer 62b, and a third corner member layer 62c. The first corner member layer 62a corresponds to the first corner layer 52a. The second corner member layer 62b corresponds to the second corner layer 52b, and the third corner member layer 62c corresponds to the third corner layer 52c. The first corner member layer 62a, the second corner member layer 62b, and the third corner member layer 62c may or may not include the reinforced fibers, in the same manner as the corner member 30. The corner member 60 may be prepared as one unit, using the same method as that for preparing the corner member 30, or the first corner member layer 62a, the second corner member layer 62b, and the third corner member layer 62c may be prepared separately, using the same method as that for preparing the corner member 30.

Step S14 in the method for forming the composite material 50 is equivalent to Step S14 in the method for forming the composite material 10 with a change in the corner member 30 to be placed, to the corner member 60. At Step S14 in the method for forming the composite material 50, when the corner member 60 is prepared as one unit, the corner member 60 is placed on the corner forming section 42. At Step S14 in the method for forming the composite material 50, when the corner member 60 is prepared at separate steps of preparing the first corner member layer 62a, of forming the second corner member layer 62b, and of forming the third corner member layer 62c, the first corner member layer 62a, the second corner member layer 62b, and the third corner member layer 62c are placed on the corner forming section 42, in the order described herein.

Step S16 in the method for forming the composite material 50 is the same as Step S16 in the method for forming the composite material 10. At Step S16 in the method for forming the composite material 50, the surrounding portion 54 formed at Step S12 and the corner 52 formed at Step S14 are pressed and heated so that the surrounding portion 54 and the corner 52 are integrated with each other, in the same manner as at Step S16 in the method for forming the composite material 10. After the corner 52 and the surrounding portion 54 are integrated, that is, after Step S16, the mold 40 is removed, and the finished composite material 50 is acquired.

When the first reinforced fibers are included in the corner member 60, the fiber-discontinuous interface on which the first reinforced fibers and the second reinforced fibers become discontinuous comes to have such a shape that the area of the surrounding portion 54 is monotonically increased, and the area occupied by the corner 52 is monotonically decreased accordingly, from the inner side toward the outer side of the composite material 50, as a result of Step S16. Specifically, this fiber-discontinuous interface comes to have a three-step stair-like shape, as a result of Step S16.

When the first reinforced fibers are not included in the corner member 60, the fiber-disrupted interface that is an interface on which the continuity of the second reinforced fibers is lost and disrupted comes to have such a shape that the area of the surrounding portion 54 is monotonically increased, and the area occupied by the corner 52 is monotonically decreased accordingly, from the inner side toward the outer side of the composite material 50, as a result of Step S16. Specifically, this fiber-disrupted interface comes to have a three-step stair-like shape, as a result of Step S16.

The shape of the fiber-discontinuous interface in the composite material 50 or fiber-disrupted interface is not limited to this example, and may be any other shape described above. In such a case, the shape of the corner member 60 for forming the corner 52 and the shape of the surrounding member 20 for forming the surrounding portion 54 are changed as appropriate.

Because the method for forming the composite material 50 is configured in a manner described above, it is possible to form the surrounding portion 54, and to then form the corner 52 in a manner closing the through-hole formed by the surrounding portion 54, in the same manner as the method for forming the composite material 10. Therefore, it is possible to form the corner 52 and the surrounding portion 54 separately, and to integrate the separately formed corner 52 and surrounding portion 54. Therefore, with the method for forming the composite material 50, the corner 52 can be formed without being affected by the surrounding portion 54, so that the quality of the corner 52 can be improved, and the high-quality corner 52 can be formed appropriately. Furthermore, the method for forming the composite material 50 can achieve the same advantageous effects as those achieved by the other method for forming the composite material 10.

In the method for forming the composite material 50, a plurality of surrounding members 20 for forming the surrounding portion 54 are placed as layers at the surrounding portion forming step (Step S12). At the corner forming step (Step S14), when a plurality of corner members 60 for forming the corner 52 are prepared as separate layers, a plurality of corner members 60 are placed as layers. At the integrating step (Step S16), the corner members 60 that are separate layers and the surrounding members 20 are integrated. Therefore, with the method for forming the composite material 50, it is possible to further improve the freedom in the shapes and the strengths of the corner 52 formed by layering a plurality of members and of the surrounding portion 54, and to further improve the qualities in the shape and the strength of the corner 52 formed by layering a plurality of members and of the surrounding portion 54.

In the method for forming the composite material 50, because the boundary between the corner 52 and the surrounding portion 54 in the composite material 50 is formed in such a manner that the area occupied by the surrounding portion 54 is monotonically increased, and the area occupied by the corner 52 is monotonically decreased accordingly, from the inner side toward the outer side of the composite material 50, in a three-step stair-like shape, the area by which the corner 52 and the surrounding portion 54 are brought into contact is increased, and the shape of the boundary between the corner 52 and the surrounding portion 54 includes uneven portions. Therefore, the corner 52 and the surrounding portion 54 can be integrated more firmly. With the method for forming the composite material 50, the corner 52 and the surrounding portion 54 can be integrated more firmly even when the boundary between the corner 52 and the surrounding portion 54 has any other shape described above, because the area by which the corner 52 and the surrounding portion 54 are brought into contact is increased.

### [Third Embodiment]

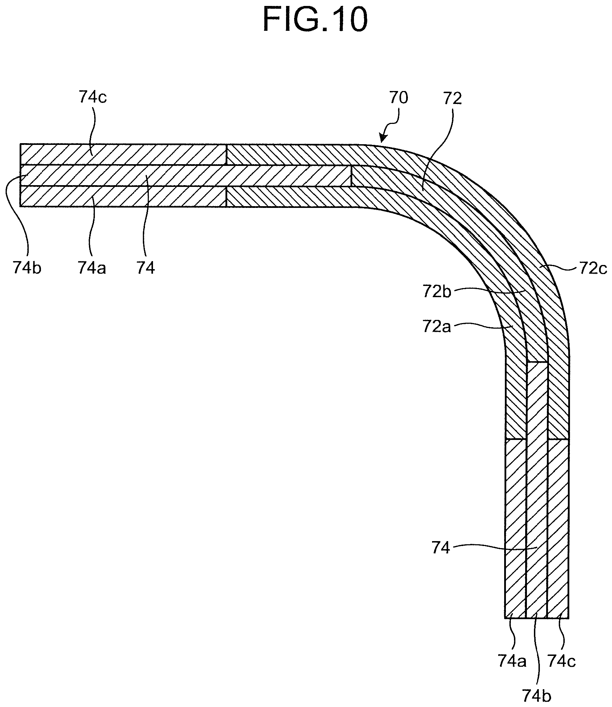

FIG. 10 is a schematic cross-sectional view of a composite material 70 according to a third embodiment. FIG. 10 is a cross-sectional view illustrating a cross section along a cross-sectional direction corresponding to the cross-sectional direction in FIGS. 2 and 7, that is, across a plane passing through a corner 72 of the composite material 70. In FIG. 10, the reinforced fibers included in the composite material 70 are not illustrated, in the same manner as in FIGS. 1, and 6 to 9. The composite material 70 is equivalent to the composite material 50 with a change in the stair-like shape formed by the boundary between the corner 52 and the surrounding portion 54 in the thickness direction of the composite material 50, to an uneven shape. In the explanation of the third embodiment, the structures that are the same as those in the second embodiment are assigned with the same reference signs as those in the second embodiment, and detailed explanations thereof will be omitted.

The composite material 70 includes, as illustrated in FIG. 10, a corner 72, and a surrounding portion 74 surrounding the corner 72. An example of the composite material 70 is explained to be the same material as the composite material 50. The relation between the reinforced fibers included in the corner 72 and those included in surrounding portion 74 is the same as the relation between the reinforced fibers included in the corner 52 and those included in the surrounding portion 54.

The composite material 70 includes three layers in the thickness direction. More specifically, the first layer of the composite material 70 includes a first corner layer 72a, and the first surrounding portion layer 74a. The second layer of the composite material 70 includes a second corner layer 72b and a second surrounding portion layer 74b. The third layer of the composite material 70 includes a third corner layer 72c and a third surrounding portion layer 74c. The corner 72 includes three layers in the thickness direction of the composite material 70, and includes the first corner layer 72a, the second corner layer 72b, and the third corner layer 72c. The surrounding portion 74 includes three layers in the thickness direction of the composite material 70, and includes the first surrounding portion layer 74a, the second surrounding portion layer 74b, and the third surrounding portion layer 74c.

In the first layer of the composite material 70, the first corner layer 72a extends toward the first surrounding portion layer 74a by a large extent. In the second layer of the composite material 70, the second corner layer 72b does not extend toward the second surrounding portion layer 74b. In the third layer of the composite material 70, the third corner layer 72c extends toward the third surrounding portion layer 74c by a large extent. The extents by which the first corner layer 72a and the third corner layer 72c extend toward the first surrounding portion layer 74a and the third surrounding portion layer 74c, respectively, are about the same, and are greater than that by which the second corner layer 72b extends toward the second surrounding portion layer 74b.

The boundary between the corner 72 and the surrounding portion 74 is formed in such a manner that a region in which the surrounding portion 74 occupies a larger area and the corner 72 occupies a smaller area is provided alternatingly with a region in which the surrounding portion 74 occupies a smaller area and the corner 72 occupies a larger area, from the inner side toward the outer side of the composite material 70. Specifically, the boundary between the corner 72 and the surrounding portion 74 is formed in such a manner that the region in which the surrounding portion 74 occupies a larger area and the corner 72 occupies a smaller area is provided alternatingly with the region in which the surrounding portion 74 occupies a smaller area and the corner 72 occupies a larger area, in a discontinuous fashion, from the inner side toward the outer side of the composite material 70, in a three-layered uneven shape. In other words, the boundary between the corner 72 and the surrounding portion 74 presents a three-layered uneven shape, in the thickness direction of the composite material 70.

More specifically, the boundary between the corner 72 and the surrounding portion 74 is formed by the interface between the first corner layer 72a and the first surrounding portion layer 74a, the touching surface between the first corner layer 72a and the second surrounding portion layer 74b, the interface between the second corner layer 72b and the second surrounding portion layer 74b, the touching surface between the third corner layer 72c and the second surrounding portion layer 74b, and the interface between the third corner layer 72c and the third surrounding portion layer 74c. The end of the second surrounding portion layer 74b is nipped between the ends of the first corner layer 72a and the third corner layer 72c. Because the corner 72 and the surrounding portion 74 are integrated, the boundary between the corner 72 and the surrounding portion 74 is unclear, in the same manner as the boundary between the corner 52 and the surrounding portion 54.

In the composite material 70, the fiber-discontinuous interface on which the first reinforced fibers included in the corner 72 and the second reinforced fibers included in the surrounding portion 74 become discontinuous is formed in such a manner that the region in which the surrounding portion 74 occupies a larger area and the corner 72 occupies a smaller area is located alternatingly with the region in which the surrounding portion 74 occupies a smaller area and the corner 72 occupies a larger area, from the inner side toward the outer side of the composite material 70. Specifically, the fiber-discontinuous interface in the composite material 70 is formed by the boundary between the corner 72 and the surrounding portion 74. In other words, the fiber-discontinuous interface in the composite material 70 presents a three-layered uneven shape.

In the composite material 70, when the corner 72 does not include any reinforced fibers, the fiber-disrupted interface that is an interface on which the continuity of the second reinforced fibers is lost and disrupted is formed in such a manner that the layer in which the surrounding portion 74 occupies a larger area and the corner 72 occupies a smaller area is provided alternatingly with the region in which the surrounding portion 74 occupies a smaller area and the corner 72 occupies a larger area, from the inner side toward the outer side of the composite material 70, in the same manner as in the fiber-discontinuous interface. Specifically, the fiber-disrupted interface in the composite material 70 is formed by the boundary between the corner 72 and the surrounding portion 74, in the same manner as in the fiber-discontinuous interface. In other words, the fiber-disrupted interface in the composite material 70 presents a three-layered uneven shape.

The boundary between the corner 72 and the surrounding portion 74 forming the fiber-discontinuous interface or the fiber-disrupted interface in the composite material 70 is not limited to this example. When the boundary between the corner 72 and the surrounding portion 74 presents an uneven shape, the number of layers achieving the uneven shape may be four or more, without limitation to three. Furthermore, the shape of the boundary between the corner 72 and the surrounding portion 74 is not limited to an uneven shape, and may be any shape in which a male shape and a female shape are engaged with each other.

Because the composite material 70 is configured in a manner described above, on the basis of the condition of the reinforced fibers included in the composite material 70, by forming the surrounding portion 74, and then forming the corner 72 in a manner closing the through-hole formed by the surrounding portion 74, in the same manner as those in the composite material 50, the corner 72 and the surrounding portion 74 are formed separately, and the separately formed corner 72 and surrounding portion 74 are integrated with each other. Therefore, in the composite material 70, the corner 72 is formed without being affected by the surrounding portion 74, so the quality of the corner 72 is improved, and the high-quality corner 72 can be included appropriately. Furthermore, the composite material 70 can achieve the same advantageous effects as those achieved by the other composite material 50.

In the composite material 70, the boundary between the corner 72 and the surrounding portion 74 presents a three-layered uneven shape. Therefore, the corner 72 and the surrounding portion 74 are engaged with each other, so that the corner 72 and the surrounding portion 74 can be integrated even more firmly. With the composite material 70, even when the boundary between the corner 72 and the surrounding portion 74 has any other shape described above, the corner 72 and the surrounding portion 74 can be integrated more firmly, because the corner 72 and the surrounding portion 74 are engaged with each other.

The method for forming the composite material 70 includes the surrounding portion forming step (Step S12), the corner forming step (Step S14), and the integrating step (Step S16), in the same manner as in the method for forming the composite material 50.

It is preferable for the method for forming the composite material 70 to further include the surrounding member preparing step (Step S11) of preparing the surrounding member 20 for forming the surrounding portion 74, in the same manner as in the method for forming the composite material 50. Each of the surrounding members 20 for forming the surrounding portion 74 has a different size and shape from those of the others, depending on which layer the surrounding member 20 is to be located, and each of such members may be prepared separately, or all of the surrounding members 20 may be prepared as one unit, in the same manner as that of the surrounding member 20 for forming the surrounding portion 54.

Step S12 in the method for forming the composite material 70 is equivalent to Step S12 in the method for forming the composite material 50 with changes in the surrounding members 20 to be placed and bent, changed correspondingly to the first surrounding portion layer 74a, the second surrounding portion layer 74b, and the third surrounding portion layer 74c. Step S12 in the method for forming the composite material 70 is changed as appropriate depending on how the surrounding member 20 is prepared, in the same manner as Step S12 in the method for forming the composite material 50.

It is preferable for the method for forming the composite material 70 to further include the corner member preparing step (Step S13) of preparing the corner member for forming the corner 72, in the same manner as in the method for forming the composite material 50. The corner members for forming the corner 72 have different sizes and shapes correspondingly to the layer to which the corner member belongs, and each of such members may be prepared separately, or all of the corner members may be prepared as one unit, in the same manner as the corner members 60 for forming the corner 52. The corner member for forming the corner 72 may or may not include reinforced fibers, in the same manner as the corner member 60 for forming the corner 52.

Step S14 in the method for forming the composite material 70 is equivalent to Step S14 in the method for forming the composite material 50 with a change in the corner member 60 to be placed, to the corner member for forming the corner 72. Step S14 in the method for forming the composite material 70 is changed as appropriate depending on how the corner member is prepared, in the same manner as Step S14 in the method for forming the composite material 50.

Step S12 and Step S14 in the method for forming the composite material 70 are different from Step S12 and Step S14 in the method for forming the composite material 50 in that these steps cannot be performed in any order, due to the shapes of the corner 72 and the surrounding portion 74. In other words, in the method for forming the composite material 70, Step S12 and Step S14 need to be performed alternatingly. Specifically, it is necessary to form the first corner layer 72a at Step S12, and then to form the second surrounding portion layer 74b at Step S14, and to form the third corner layer 72c at subsequent Step S12.

Step S16 in the method for forming the composite material 70 is the same as Step S16 in the method for forming the composite material 50. At Step S16 in the method for forming the composite material 70, the surrounding portion 74 formed at Step S12 and the corner 72 formed at Step S14 are pressed and heated so that the surrounding portion 74 and the corner 72 are integrated with each other, in the same manner as Step S16 in the method for forming the composite material 50. After the corner 72 and the surrounding portion 74 are integrated, that is, after Step S16, the mold 40 is removed, and the finished composite material 70 is acquired.

Furthermore, when the first reinforced fibers are included in the corner member for forming the corner 72, the fiber-discontinuous interface on which the first reinforced fibers and the second reinforced fibers become discontinuous comes to have such a shape that the region in which the surrounding portion 74 occupies a larger area and the corner 72 occupies a smaller area is provided alternatingly with the region in which the surrounding portion 74 occupies a smaller area and the corner 72 occupies a larger area, from the inner side toward the outer side of the composite material 70, as a result of Step S16. Specifically, this fiber-discontinuous interface comes to present a three-layered uneven shape, as a result of Step S16.

Furthermore, when the first reinforced fibers are not included in the corner member for forming the corner 72, the fiber-disrupted interface that is an interface on which the continuity of the second reinforced fibers is lost and disrupted comes to have such a shape that the region in which the surrounding portion 74 occupies a larger area and the corner 72 occupies a smaller area is provided alternatingly with the region in which the surrounding portion 74 occupies a smaller area and the corner 72 occupies a larger area, from the inner side toward the outer side of the composite material 70, as a result of Step S16. Specifically, this fiber-disrupted interface comes to present a three-layered uneven shape, as a result of Step S16.

The shape formed by the fiber-discontinuous interface or the fiber-disrupted interface in the composite material 70 is not limited thereto, and any other shape described above may be formed. In such a case, the shapes of the corner member for forming the corner 72 and the surrounding member 20 for forming the surrounding portion 74 are changed as appropriate.

Because the method for forming the composite material 70 is configured in a manner described above, it is possible to form the surrounding portion 74, and to then form the corner 72 formed in a manner closing the through-hole formed by the surrounding portion 74, in the same manner as in the method for forming the composite material 50. Therefore, it is possible to form the corner 72 and the surrounding portion 74 separately, and to integrate the separately formed corner 72 and the surrounding portion 74. Therefore, with the method for forming the composite material 70, the corner 72 can be formed without being affected by the surrounding portion 74, so the quality of the corner 72 can be improved, and the high-quality corner 72 can be formed appropriately. Furthermore, the method for forming the composite material 70 can achieve the same advantageous effects as those achieved by the other method for forming the composite material 50.

In the method for forming the composite material 70, because the boundary between the corner 72 and the surrounding portion 74 in the composite material 70 presents a three-layered uneven shape, and the corner 72 and the surrounding portion 74 are engaged with each other, the corner 72 and the surrounding portion 74 can be integrated even more firmly. With the method for forming the composite material 70, even when the boundary between the corner 72 and the surrounding portion 74 forms any other shape described above, the corner 72 and the surrounding portion 74 are engaged with each other. Therefore, the corner 72 and the surrounding portion 74 can be integrated more firmly.

### [Fourth Embodiment]

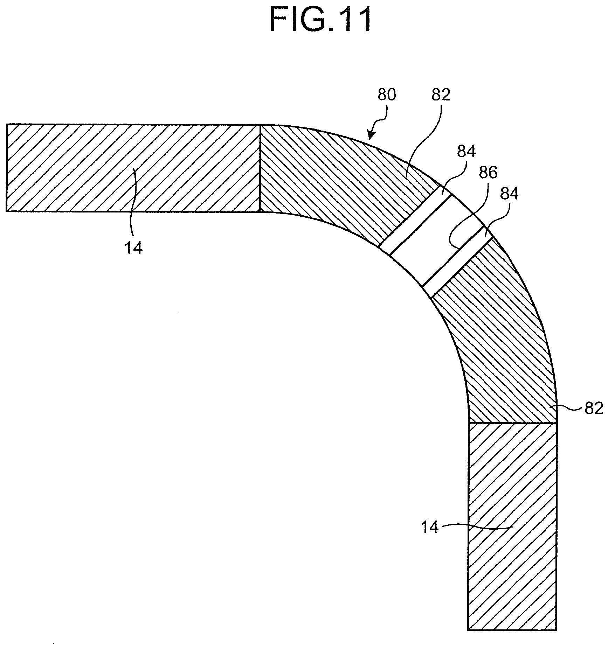

FIG. 11 is a schematic cross-sectional view of a composite material 80 according to a fourth embodiment. FIG. 11 is a cross-sectional view illustrating a cross section along a cross-sectional direction corresponding to the cross-sectional direction in FIGS. 2, 7, and 10, that is, across a plane passing through a corner 82 of the composite material 80. In FIG. 11, the reinforced fibers included in the composite material 80 are not illustrated, in the same manner as in FIGS. 1, and 6 to 10. The composite material 80 is equivalent to the composite material 10 with a change in the corner 12, to the corner 82 having an inlet 86. In the explanation of the fourth embodiment, the structures that are the same as those in the first embodiment are assigned with the same reference signs as those in the first embodiment, and detailed explanations thereof will be omitted.

The composite material 80 includes, as illustrated in FIG. 11, a corner 82, and a surrounding portion 14 surrounding the corner 82. An example of the composite material 80 is explained to be the same material as the composite material 10. The relation between the reinforced fibers included in the corner 82 and those included in the surrounding portion 14 is the same as the relation between the reinforced fibers included in the corner 12 and those included in the surrounding portion 14.

The corner 82 has the inlet 86 penetrating through the composite material 80 in the thickness direction. The inlet 86 is reinforced and stabilized by being provided with an inlet tube 84.

Because the composite material 80 is configured in a manner described above, liquid or the like can be introduced to or discharged from the internal space of the composite material 80 via the inlet 86, while achieving the same advantageous effects as those achieved by the composite material 10.

The method for forming the composite material 80 includes the surrounding portion forming step (Step S12), the corner forming step (Step S14), and the integrating step (Step S16), in the same manner as in the method for forming the composite material 10. Step S12 in the method for forming the composite material 80 is the same as Step S12 in the method for forming the composite material 10.

Step S14 in the method for forming the composite material 80 is equivalent to Step S14 in the method for forming the composite material 10 with a change in the corner member 30 to be placed, to a corner member for forming the corner 82. The corner member for forming the corner 82 may be placed with the inlet tube 84 provided to the inlet 86, or without the inlet tube 84 provided to the inlet 86.

Step S16 in the method for forming the composite material 80 is the same as Step S16 in the method for forming the composite material 10. At Step S16 in the method for forming the composite material 80, the surrounding portion 14 formed at Step S12 and the corner 82 formed at Step S14 are pressed and heated so that the surrounding portion 14 and the corner 82 are integrated with each other, in the same manner as at Step S16 in the method for forming the composite material 10. After the corner 82 and the surrounding portion 14 are integrated, that is, after Step S16, the mold 40 is removed. If the corner member for forming the corner 82 is placed with the inlet tube 84 provided to the inlet 86 at Step S14, the finished composite material 80 is acquired in the method for forming the composite material 80. If the corner member for forming the corner 82 is placed without the inlet tube 84 provided to the inlet 86 at Step S14 in the method for forming the composite material 80, the finished composite material 80 is acquired by inserting the inlet tube 84 into the inlet 86.

Because the method for forming the composite material 80 is configured in a manner described above, liquid or the like can be introduced to or discharged from the internal space of the composite material 80 via the inlet 86, while achieving the same advantageous effects as those achieved by the composite material 10.

The inlet 86 may also be provided to the composite material 50 and the composite material 70, in the same manner as in the composite material 10. In such a case, the inlet 86 can be formed by providing a hole that is to serve as the inlet 86 to the corner member 60 for forming the corner 52 in the composite material 50, or by providing a hole that is to serve as the inlet 86 to the corner member for forming the corner 72 in the composite material 70. When the composite material 50 is to be provided with the inlet 86 and the corner member 60 is prepared as one unit, the inlet tube 84 can be provided to the inlet 86 before Step S16. When the composite material 50 is to be provided with the inlet 86 and the corner member 60 is prepared at separate steps, or when the composite material 70 is to be provided with the inlet 86, the inlet tube 84 can be inserted into the inlet 86 after the mold 40 is removed, after Step S16.

Furthermore, it is also possible for the composite material to include only the surrounding portion without being provided with the corner, to form the corner as a through-hole surrounded by the surrounding portion, and to use the through-hole as the inlet. It is also possible to provide an inlet tube to such a through-hole.

### Reference Signs List

10, 50, 70, 80 Composite material
12, 52, 72, 82 Corner
12f, 32f First reinforced fibers
14, 54, 74 Surrounding portion
14a First face portion
14b Second face portion
14c Third face portion
14f, 24f Second reinforced fibers
14x First face-connecting portion
14y Second face-connecting portion
14z Third face-connecting portion
20 Surrounding member
24a First face member
24b Second face member
24c Third face member
24x First face-connecting member
24y Second face-connecting member
24z Third face-connecting member
28 Opening
30, 60 Corner member
40 Mold
42 Corner forming section
44 Surrounding portion forming section
52a, 72a First corner layer
52b, 72b Second corner layer
52c, 72c Third corner layer
54a, 74a First surrounding portion layer
54b, 74b Second surrounding portion layer
54c, 74c Third surrounding portion layer
62a First corner member layer
62b Second corner member layer
62c Third corner member layer
84 Inlet tube
86 Inlet
100 Conventional composite material
102 Conventional corner
110 Conventional member
112 Conventional corner piece

## Claims

1. A method for forming a composite material (10;50;70;80) having a corner (12;52;72;82) and a surrounding portion (14;54;74) which includes a first face portion (14a), a second face portion (14b), a third face portion (14c), a first face-connecting portion (14x), a second face-connecting portion (14y), and a third face-connecting portion (14z), wherein
the first face-connecting portion (14x) is located along the line where the first face portion (14a) and the second face portion (14b) intersect with each other, and serves to smooth out a curve between the first face portion (14a) and the second face portion (14b),
the second face-connecting portion (14y) is located along the line where the second face portion (14b) and the third face portion (14c) intersect with each other, and serves to smooth out a curve between the second face portion (14b) and the third face portion (14c),
the third face-connecting portion (14z) is located along the line where the third face portion (14c) and the first face portion (14a) intersect with each other, and serves to smooth out a curve between the third face portion (14c) and the first face portion (14a),
the surrounding portion (14;54;74) includes the first face portion (14a), the second face portion (14b), and the third face portion (14c) that intersect with one another,
the corner (12;52;72;82) is a trihedral angle that is located at the position where the first face portion (14a), the second face portion (14b), and the third face portion (14c) of the surrounding portion (14;54;74) intersect with one another, and
the corner (12;52;72;82) has a smooth curved surface that is continuously connected to the first face portion (14a), the second face portion (14b), and the third face portion (14c), the method comprising:
a surrounding portion forming step (S12) of forming the surrounding portion (14;54;74) such that the surrounding portion (14;54;74) surrounds a through-hole existing at the position where the corner (12;52;72;82) is to be formed;
a corner forming step (S14) of forming the corner (12;52;72;82) in a manner closing the through-hole; and
an integrating step (S16) of integrating the surrounding portion (14;54;74) and the corner (12;52;72;82).

2. The method for forming a composite material (10;50;70;80) according to claim 1, further comprising a surrounding member preparing step (S11) of preparing a surrounding member (20) for forming the surrounding portion (14;54;74) .

3. The method for forming a composite material (10;50;70;80) according to claim 1 or 2, further comprising a/the corner member preparing step (S13) of preparing a corner member (30;60) for forming the corner (12;52;72;82).

4. The method for forming a composite material (10;50;70;80) according to any one of claims 1 to 3, wherein
the surrounding portion forming step (S12) includes placing a plurality of surrounding members (20) as layers to form the surrounding portion (14;54;74),
the corner forming step (S14) includes placing a corner member (30;60) to form the corner (12;52;72;82), and
the integrating step (S16) includes integrating the corner member (30;60) and the surrounding members (20).

5. The method for forming a composite material (10;50;70;80) according to any one of claims 1 to 3, wherein
the surrounding portion forming step (S12) includes placing a plurality of surrounding members (20) as layers to form the surrounding portion (14;54;74),
the corner forming step (S14) includes placing a plurality of corner members (30;60) as layers to form the corner (12;52;72;82), and
the integrating step (S16) includes integrating the layered corner members (30;60) and the layered surrounding members (20).

6. The method for forming a composite material (10;80) according to any one of claims 1 to 5, wherein a boundary between the corner (12;82) and the surrounding portion (14) has a planar shape extending in a thickness direction of the composite material (10;80).

7. The method for forming a composite material (50) according to any one of claims 1 to 5, wherein a boundary between the corner (52) and the surrounding portion (54) is formed into a shape such that the surrounding portion (54) is increased from an inner side toward an outer side of the composite material (50) as the corner (52) is decreased accordingly, or a shape such that the surrounding portion (54) is decreased from the inner side toward the outer side of the composite material (50) as the corner (52) is increased accordingly.

8. The method for forming a composite material (70) according to claim 5, wherein a boundary between the corner (72) and the surrounding portion (74) is formed into a shape such that from an inner side toward an outer side of the composite material (70), a region in which the surrounding portion (74) is increased as the corner (72) is decreased is located alternatingly with a region in which the surrounding portion (74) is decreased as the corner region is increased.

9. The method for forming a composite material (10;50;70;80) according to any one of claims 1 to 8, wherein
the surrounding portion forming step (S12) includes placing a surrounding member (20) at a position where the surrounding portion (14;54;74) is to be formed in a mold (40) for forming inside of the composite material (10;50;70;80),
the corner forming step (S14) includes placing a corner member (30;60) at a position where the corner (12;52;72;82) is to be formed in the mold (40), and
the mold (40) is removed after the integrating step (S16) .

10. The method for forming a composite material (10;50;70;80) according to any one of claims 1 to 9, wherein
the composite material (10;50;70;80) is obtained by impregnating reinforced fibers with thermosetting resin,
the thermosetting resin takes a softened state, a hardened state, and a semi-hardened state,
the surrounding portion forming step (S12) and the corner forming step (S14) include bringing the thermosetting resin included in at least one of the surrounding portion (14;54;74) and the corner (12;52;72;82) into the softened state or the semi-hardened state, and
the integrating step (S16) includes bringing the thermosetting resin into the hardened state.

11. The method for forming a composite material (10;50;70;80) according to claim 10, wherein
the thermosetting resin with which the surrounding portion (14;54;74) is impregnated is of a same type as the thermosetting resin with which the corner (12;52;72;82) is impregnated, and
the integrating step (S16) includes integrating the thermosetting resin with which the surrounding portion (14;54;74) is impregnated and the thermosetting resin with which the corner (12;52;72;82) is impregnated.

12. The method for forming a composite material (10;50;70;80) according to claim 10 or 11, wherein
a surrounding member (20) for forming the surrounding portion (14;54;74) includes the reinforced fibers, and
a corner member (30, 60) for forming the corner (12;52;72;82) does not include the reinforced fibers.

13. The method for forming a composite material (10;50;70;80) according to claim 10 or 11, wherein
a surrounding member (20) for forming the surrounding portion (14;54;74) includes the reinforced fibers, and
a corner member (30;60) for forming the corner (12;52;72;82) includes the reinforced fibers.

14. The method for forming a composite material (80) according to any one of claims 1 to 13, wherein the corner (82) has an inlet (86) that passes through the composite material (80).

15. A composite material (10;50;70;80) having a corner (12;52;72;82) and a surrounding portion (14;54;74) which includes a first face portion (14a), a second face portion (14b), a third face portion (14c), a first face-connecting portion (14x), a second face-connecting portion (14y), and a third face-connecting portion (14z), wherein
the first face-connecting portion (14x) is located along the line where the first face portion (14a) and the second face portion (14b) intersect with each other, and serves to smooth out a curve between the first face portion (14a) and the second face portion (14b),
the second face-connecting portion (14y) is located along the line where the second face portion (14b) and the third face portion (14c) intersect with each other, and serves to smooth out a curve between the second face portion (14b) and the third face portion (14c),
the third face-connecting portion (14z) is located along the line where the third face portion (14c) and the first face portion (14a) intersect with each other, and serves to smooth out a curve between the third face portion (14c) and the first face portion (14a),
the surrounding portion (14;54;74) includes the first face portion (14a), the second face portion (14b), and the third face portion (14c) that intersect with one another, and
the corner (12;52;72;82) is a trihedral angle that is located at the position where the first face portion (14a), the second face portion (14b), and the third face portion (14c) of the surrounding portion (14;54;74) intersect with one another, wherein
the composite material (10;50;70;80) is obtained by impregnating reinforced fibers with thermosetting resin, and
the composite material (10;50;70;80) comprises:
the corner (12;52;72;82); and
the surrounding portion (14;54;74) that includes reinforced fibers and surrounds the corner (12;52;72;82),
wherein the corner (12;52;72;82) has a smooth curved surface that is continuously connected to the first face portion (14a), the second face portion (14b), and the third face portion (14c).

16. The composite material (10;80) according to claim 15, wherein a fiber-disrupted interface that is an interface on which continuity of the reinforced fibers included in the surrounding portion (14) is lost and disrupted has a planar shape extending in a thickness direction of the composite material (10;80).

17. The composite material (70) according to claim 15, wherein a fiber-disrupted interface that is an interface on which continuity of the reinforced fibers included in the surrounding portion (74) is lost and disrupted is formed into a shape such that the surrounding portion (74) is increased from an inner side toward an outer side of the composite material (70) as the corner (72) is decreased accordingly, or a shape such that the surrounding portion (74) is decreased from the inner side toward the outer side of the composite material (70) as the corner (72) is increased accordingly.

18. The composite material (70) according to claim 15, wherein a fiber-disrupted interface that is an interface on which continuity of the reinforced fibers included in the surrounding portion (74) is lost and disrupted is formed into a shape such that from an inner side toward an outer side of the composite material (70), a region in which the surrounding portion (74)is increased as the corner (72) is decreased is located alternatingly with a region in which the surrounding portion (74) is decreased as the corner region is increased.

## Patentansprüche

1. Ein Verfahren zum Formen eines Verbundmaterials (10;50;70;80) mit einer Ecke (12;52;72;82) und einem umgebenden Abschnitt (14;54;74), der einen ersten Flächenabschnitt (14a), einen zweiten Flächenabschnitt (14b), einen dritten Flächenabschnitt (14c), einen ersten Flächenverbindungsabschnitt (14x), einen zweiten Flächenverbindungsabschnitt (14y) und einen dritten Flächenverbindungsabschnitt (14z) umfasst, wobei
der erste Flächenverbindungsabschnitt (14x) entlang der Linie angeordnet ist, an der sich der erste Flächenabschnitt (14a) und der zweite Flächenabschnitt (14b) schneiden, und dazu dient, eine Kurve zwischen dem ersten Flächenabschnitt (14a) und dem zweiten Flächenabschnitt (14b) zu glätten,
der zweite Flächenverbindungsabschnitt (14y) entlang der Linie angeordnet ist, an der sich der zweite Flächenabschnitt (14b) und der dritte Flächenabschnitt (14c) schneiden, und dazu dient, eine Kurve zwischen dem zweiten Flächenabschnitt (14b) und dem dritten Flächenabschnitt (14c) zu glätten,
der dritte Flächenverbindungsabschnitt (14z) entlang der Linie angeordnet ist, an der sich der dritte Flächenabschnitt (14c) und der erste Flächenabschnitt (14a) schneiden, und dazu dient, eine Kurve zwischen dem dritten Flächenabschnitt (14c) und dem ersten Flächenabschnitt (14a) zu glätten,
der umgebende Abschnitt (14;54;74) den ersten Flächenabschnitt (14a), den zweiten Flächenabschnitt (14b) und den dritten Flächenabschnitt (14c) umfasst, die einander schneiden,
die Ecke (12;52;72;82) ein dreiflächiger Winkel ist, der sich an der Position befindet, an der der erste Flächenabschnitt (14a), der zweite Flächenabschnitt (14b) und der dritte Flächenabschnitt (14c) des umgebenden Abschnitts (14;54;74) einander schneiden, und
die Ecke (12;52;72;82) eine gleichmäßige, gekrümmte Oberfläche aufweist, die kontinuierlich mit dem ersten Flächenabschnitt (14a), dem zweiten Flächenabschnitt (14b) und dem dritten Flächenabschnitt (14c) verbunden ist, wobei das Verfahren umfasst:
einen Schritt (S12) eines Formens des umgebenden Abschnitts, bei dem der umgebende Abschnitt (14;54;74) so geformt wird, dass der umgebende Abschnitt (14;54;74) ein Durchgangsloch umgibt, das an der Stelle vorhanden ist, an der die Ecke (12;52;72;82) geformt werden soll,
einen Eckenformungsschritt (S14) eines Formens der Ecke (12;52;72;82) in einer Weise, die das Durchgangsloch verschließt, und
einen Integrationsschritt (S16) eines Integrierens des umgebenden Abschnitts (14;54;74) und der Ecke (12;52;72;82).

2. Das Verfahren zum Formen eines Verbundmaterials (10;50;70;80) nach Anspruch 1, das ferner einen Schritt (S11) eines Vorbereitens eines umgebenden Elements (20) zum Formen des umgebenden Abschnitts (14;54;74) umfasst.

3. Das Verfahren zum Formen eines Verbundmaterials (10;50;70;80) nach Anspruch 1 oder 2, das ferner einen/den Schritt (S13) eines Herstellens eines Eckelements (30;60) zum Formen der Ecke (12;52;72;82) umfasst.

4. Das Verfahren zum Formen eines Verbundmaterials (10;50;70;80) nach einem der Ansprüche 1 bis 3, wobei
der Schritt (S12) eines Formens des umgebenden Anschnitts ein Anordnen einer Vielzahl von umgebenden Elementen (20) als Schichten zum Bilden des umgebenden Abschnitts (14;54;74) umfasst,
der Eckenformungsschritt (S14) ein Platzieren eines Eckelements (30;60) umfasst, um die Ecke (12;52;72;82) zu bilden, und
der Integrationsschritt (S16) ein Integrieren des Eckelements (30;60) und der umgebenden Elemente (20) umfasst.

5. Das Verfahren zum Formen eines Verbundmaterials (10;50;70;80) nach einem der Ansprüche 1 bis 3, wobei
der Schritt (S12) eines Formens des umgebenden Anschnitts ein Anordnen einer Vielzahl von umgebenden Elementen (20) als Schichten zur Bildung des umgebenden Abschnitts (14;54;74) umfasst,
der Eckenformungsschritt (S14) ein Anordnen einer Vielzahl von Eckelementen (30;60) als Schichten zum Bilden der Ecke (12;52;72;82) umfasst, und
der Integrationsschritt (S16) ein Integrieren der geschichteten Eckelemente (30;60) und der geschichteten umgebenden Elemente (20) umfasst.

6. Das Verfahren zum Formen eines Verbundmaterials (10;80) nach einem der Ansprüche 1 bis 5, wobei ein Übergang zwischen der Ecke (12;82) und dem umgebenden Abschnitt (14) eine ebene Form aufweist, die sich in einer Dickenrichtung des Verbundmaterials (10;80) erstreckt.

7. Das Verfahren zum Formen eines Verbundmaterials (50) nach einem der Ansprüche 1 bis 5, wobei ein Übergang zwischen der Ecke (52) und dem umgebenden Abschnitt (54) in eine solche Form geformt wird, dass der umgebende Abschnitt (54) von einer Innenseite zu einer Außenseite des Verbundmaterials (50) hin vergrößert wird, wenn die Ecke (52) entsprechend vermindert wird, oder in eine solche Form, dass der umgebende Abschnitt (54) von der Innenseite zur Außenseite des Verbundmaterials (50) hin vermindert wird, wenn die Ecke (52) entsprechend vergrößert wird.

8. Das Verfahren zum Formen eines Verbundmaterials (70) nach Anspruch 5, wobei ein Übergang zwischen der Ecke (72) und dem umgebenden Abschnitt (74) in einer solchen Form gebildet wird, dass von einer Innenseite zu einer Außenseite des Verbundmaterials (70) ein Bereich, in dem der umgebende Abschnitt (74) vergrößert wird, wenn die Ecke (72) vermindert wird, abwechselnd mit einem Bereich angeordnet ist, in dem der umgebende Abschnitt (74) vermindert wird, wenn der Eckbereich vergrößert wird.

9. Das Verfahren zum Formen eines Verbundmaterials (10;50;70;80) nach einem der Ansprüche 1 bis 8, wobei
der Schritt (S12) eines Formens des umgebenden Abschnitts ein Platzieren eines umgebenden Elements (20) an einer Position umfasst, an der der umgebende Abschnitt (14;54;74) in einer Form (40) zum Formen des Inneren des Verbundmaterials (10;50;70;80) geformt werden soll,
der Eckenformungsschritt (S14) ein Platzieren eines Eckelements (30;60) an einer Position umfasst, an der die Ecke (12;52;72;82) in der Form (40) geformt werden soll, und
die Form (40) nach dem Integrationsschritt (S16) entfernt wird.

10. Das Verfahren zum Formen eines Verbundmaterials (10;50;70;80) nach einem der Ansprüche 1 bis 9, wobei
das Verbundmaterial (10;50;70;80) durch Imprägnieren von verstärkten Fasern mit wärmehärtendem Harz erhalten wird,
wobei das wärmehärtende Harz einen erweichten Zustand, einen gehärteten Zustand und einen halbgehärteten Zustand einnimmt,
der Schritt (S12) eines Formens des umgebenden Abschnitts und der Eckenformungsschritt (S14) ein Überführen des wärmehärtenden Harzes, das in mindestens einem von dem umgebenden Abschnitt (14;54;74) und der Ecke (12;52;72;82) enthalten ist, in den erweichten Zustand oder den halbgehärteten Zustand umfasst, und
der Integrationsschritt (S16) ein Überführen des wärmehärtenden Harzes in den gehärteten Zustand umfasst.

11. Das Verfahren zum Formen eines Verbundmaterials (10;50;70;80) nach Anspruch 10, wobei
das wärmehärtende Harz, mit dem der umgebende Abschnitt (14;54;74) imprägniert wird, vom gleichen Typ ist wie das wärmehärtende Harz, mit dem die Ecke (12;52;72;82) imprägniert wird, und
der Integrationsschritt (S16) ein Integrieren des wärmehärtenden Harzes, mit dem der umgebende Abschnitt (14;54;74) imprägniert ist, und des wärmehärtenden Harzes, mit dem die Ecke (12;52;72;82) imprägniert ist, umfasst.

12. Das Verfahren zum Formen eines Verbundmaterials (10;50;70;80) nach Anspruch 10 oder 11, wobei
ein Umgebungselement (20) zum Formen des umgebenden Abschnitts (14;54;74) die verstärkten Fasern enthält, und
ein Eckelement (30,60) zum Formen der Ecke (12;52;72;82) die verstärkten Fasern nicht enthält.

13. Das Verfahren zum Formen eines Verbundmaterials (10;50;70;80) nach Anspruch 10 oder 11, wobei
ein Umgebungselement (20) zum Formen des umgebenden Abschnitts (14;54;74) die verstärkten Fasern enthält, und
ein Eckelement (30;60) zum Formen der Ecke (12;52;72;82) die verstärkten Fasern enthält.

14. Das Verfahren zum Formen eines Verbundmaterials 2(80) nach einem der Ansprüche 1 bis 13, wobei die Ecke (82) einen Einlass (86) aufweist, der durch das Verbundmaterial (80) hindurchgeht.

15. Ein Verbundmaterial (10;50;70;80) mit einer Ecke (12;52;72;82) und einem umgebenden Abschnitt (14;54;74), der einen ersten Flächenabschnitt (14a), einen zweiten Flächenabschnitt (14b), einen dritten Flächenabschnitt (14c), einen ersten Flächenverbindungsabschnitt (14x), einen zweiten Flächenverbindungsabschnitt (14y) und einen dritten Flächenverbindungsabschnitt (14z) aufweist, wobei
der erste Flächenverbindungsabschnitt (14x) entlang der Linie angeordnet ist, an der sich der erste Flächenabschnitt (14a) und der zweite Flächenabschnitt (14b) schneiden, und dazu dient, eine Kurve zwischen dem ersten Flächenabschnitt (14a) und dem zweiten Flächenabschnitt (14b) zu glätten,
der zweite Flächenverbindungsabschnitt (14y) entlang der Linie angeordnet ist, an der sich der zweite Flächenabschnitt (14b) und der dritte Flächenabschnitt (14c) schneiden, und dazu dient, eine Kurve zwischen dem zweiten Flächenabschnitt (14b) und dem dritten Flächenabschnitt (14c) zu glätten,
der dritte Flächenverbindungsabschnitt (14z) entlang der Linie angeordnet ist, an der sich der dritte Flächenabschnitt (14c) und der erste Flächenabschnitt (14a) schneiden, und dazu dient, eine Kurve zwischen dem dritten Flächenabschnitt (14c) und dem ersten Flächenabschnitt (14a) zu glätten,
der umgebende Abschnitt (14;54;74) den ersten Flächenabschnitt (14a), den zweiten Flächenabschnitt (14b) und den dritten Flächenabschnitt (14c) umfasst, die einander schneiden, und
die Ecke (12;52;72;82) ein dreiflächiger Winkel ist, der sich an der Position befindet, an der der erste Flächenabschnitt (14a), der zweite Flächenabschnitt (14b) und der dritte Flächenabschnitt (14c) des umgebenden Abschnitts (14;54;74) einander schneiden, wobei
das Verbundmaterial (10;50;70;80) durch Imprägnieren von verstärkten Fasern mit wärmehärtendem Harz erhalten ist, und
das Verbundmaterial (10;50;70;80) umfasst:
die Ecke (12;52;72;82), und
den umgebenden Abschnitt (14;54;74), der verstärkte Fasern enthält und die Ecke (12;52;72;82) umgibt,
wobei die Ecke (12;52;72;82) eine gleichmäßige, gekrümmte Oberfläche aufweist, die kontinuierlich mit dem ersten Flächenabschnitt (14a), dem zweiten Flächenabschnitt (14b) und dem dritten Flächenabschnitt (14c) verbunden ist.

16. Das Verbundmaterial (10;80) nach Anspruch 15, wobei eine faserunterbrochene Schnittstelle, die eine Schnittstelle ist, an der eine Kontinuität der verstärkten Fasern, die in dem umgebenden Abschnitt (14) enthalten sind, verloren und unterbrochen ist, eine ebene Form hat, die sich in einer Dickenrichtung des Verbundmaterials (10;80) erstreckt.

17. Das Verbundmaterial (70) nach Anspruch 15, wobei eine faserunterbrochene Schnittstelle, die eine Schnittstelle ist, an der die Kontinuität der verstärkten Fasern, die in dem umgebenden Abschnitt (74) enthalten sind, verloren und unterbrochen ist, in eine solche Form gebracht ist, dass der umgebende Abschnitt (74) von einer Innenseite zu einer Außenseite des Verbundmaterials (70) vergrößert ist, wenn die Ecke (72) entsprechend vermindert ist, oder eine solche Form aufweist, dass der umgebende Abschnitt (74) von der Innenseite zur Außenseite des Verbundwerkstoffs (70) hin vermindert ist, wenn die Ecke (72) entsprechend vergrößert ist.

18. Das Verbundmaterial (70) nach Anspruch 15, wobei eine faserunterbrochene Schnittstelle, die eine Schnittstelle ist, an der die Kontinuität der verstärkten Fasern, die in dem umgebenden Abschnitt (74) enthalten sind, verloren und unterbrochen ist, in eine solche Form gebracht ist, dass von einer Innenseite zu einer Außenseite des Verbundwerkstoffs (70) ein Bereich, in dem der umgebende Abschnitt (74) vergrößert ist, wenn die Ecke (72) vermindert ist, abwechselnd mit einem Bereich angeordnet ist, in dem der umgebende Abschnitt (74) vermindert ist, wenn der Eckbereich vergrößert ist.

## Revendications

1. Procédé de formation d'un matériau (10 ; 50 ; 70 ; 80) composite ayant un coin (12 ; 52 ; 72 ; 82) et une partie (14 ; 54 ; 74) environnante, qui comprend une première partie (14a) de face, une deuxième partie (14b) de face et une troisième partie (14c) de face, une première partie (14x) de liaison de face, une deuxième partie (14y) de liaison de face, et une troisième partie (14z) de liaison, dans lequel
la première partie (14x) de liaison de face est placée suivant la ligne suivant laquelle le première partie (14a) de face et la deuxième partie (14b) de face sont en intersection l'une avec l'autre, et sert à adoucir une courbe entre la première partie (14a) de face et la deuxième partie (14b) de face,
la deuxième partie (14y) de liaison de face est placée suivant la ligne suivant laquelle la deuxième partie (14b) de face et la troisième partie (14c) de face sont en intersection l'une avec l'autre, et sert à adoucir une courbe entre la deuxième partie (14b) de face et la troisième partie (14c) de face,
la troisième partie (14z) de liaison de face est placée suivant la ligne suivant laquelle la troisième partie (14c) de face et la première partie (14a) de face sont en intersection l'une avec l'autre, et sert à adoucir une courbe entre la troisième partie (14c) de face et la première partie (14a) de face,
la partie (14 ; 54 ; 74) environnante comprend la première partie (14a) de face, la deuxième partie (14b) de face et la troisième partie (14c) de face, qui sont en intersection les unes avec les autres,
le coin (12 ; 52 ; 72 ; 82) est un angle triédrique, qui est placé à la position où la première partie (14a) de face, la deuxième partie (14b) de face et la troisième partie (14c) de face de la partie (14 ; 54 ; 74) environnante sont en intersection les unes avec les autres, et
le coin (12 ; 52 ; 72 ; 82) a une surface incurvée de manière douce, qui est reliée continuellement à la première partie (14a) de face, à la deuxième partie (14b) de face et à la troisième partie (14c) de face, le procédé comprenant :
un stade (S12) de formation d'une partie environnante, dans lequel on forme la partie (14 ; 54 ; 74) environnante, de manière à ce que la partie (14 ; 54 ; 74) environnante entoure un trou traversant existant en la position où le coin (12 ; 52 ; 72 ; 82) doit être formé ;
un stade (S14) de formation d'un coin, dans lequel on forme le coin (12 ; 52 ; 72 ; 82) d'une manière fermant le trou traversant ; et
un stade (S16) d'intégration, dans lequel on intègre la partie (14 ; 54 ; 74) environnante et le coin (12 ; 52 ; 72 ; 82).

2. Procédé de formation d'un matériau (10 ; 50 ; 70 ; 80) composite suivant la revendication 1, comprenant en outre un stade (S11) de préparation d'un élément environnant, dans lequel on prépare un élément (20) environnant pour former la partie (14 ; 54 ; 74) environnante.

3. Procédé de formation d'un matériau (10 ; 50 ; 70 ; 80) composite suivant la revendication 1 ou 2, comprenant en outre un / le stade (S13) de préparation d'un élément de coin, dans lequel on prépare un élément (30 ; 60) de coin pour former le coin (12 ; 52 ; 72 ; 82).

4. Procédé de formation d'un matériau (10 ; 50 ; 70 ; 80) composite suivant l'une quelconque des revendications 1 à 3, dans lequel
le stade (S12) de formation d'une partie environnante comprend placer une pluralité d'éléments (20) environnants comme couches pour former la partie (14 ; 54 ; 74) environnante,
le stade (S14) de formation d'un coin comprend placer un élément (30 ; 60) de coin pour former le coin (12 ; 52 ; 72 ; 82), et
le stade (S16) d'intégration comprend intégrer l'élément (30 ; 60) de coin et les éléments (20) environnants.

5. Procédé de formation d'un matériau (10 ; 50 ; 70 ; 80) composite suivant l'une quelconque des revendications 1 à 3, dans lequel
le stade (S12) de formation d'une partie environnante comprend placer une pluralité d'éléments (20) environnants comme couches pour former la partie (14 ; 54 ; 74) environnante,
le stade (S14) de formation d'un coin comprend placer une pluralité d'éléments (30 ; 60) de coin comme couches pour former le coin (12 ; 52 ; 72 ; 82), et
le stade (S16) d'intégration comprend intégrer les éléments (30 ; 60) de coin mis en couche et les éléments (20) environnants mis en couche.

6. Procédé de formation d'un matériau (10 ; 80) composite suivant l'une quelconque des revendications 1 à 5, dans lequel une limite entre le coin (12 ; 82) et la partie (14) environnante a une forme plane s'étendant dans une direction en épaisseur du matériau (10 ; 80) composite.

7. Procédé de formation d'un matériau (50) composite suivant l'une quelconque des revendications 1 à 5, dans lequel une limite entre le coin (52) et la partie (54) environnante est conformée en une forme telle que la partie (54) environnante augmente d'un côté intérieur vers un côté extérieur du matériau (50) composite, alors que le coin (52) diminue en conséquence, ou une forme telle que la partie (54) environnante diminue du côté intérieur vers le côté extérieur du matériau (50) composite, alors que le coin (52) augmente en conséquence.

8. Procédé de formation d'un matériau (70) composite suivant la revendication 5, dans lequel une limite entre le coin (72) et la partie (74) environnante est formée en une forme telle que, d'un côté intérieur vers un côté extérieur du matériau (70) composite, une région, dans laquelle la partie (74) environnante diminue, alors que le coin (72) augmente, est placée en alternance avec une région dans laquelle la partie (74) environnante diminue, alors que la région de coin augmente.

9. Procédé de formation d'un matériau (10 ; 50 ; 70 ; 80) composite suivant l'une quelconque des revendications 1 à 8, dans lequel
le stade (S12) de formation d'une partie environnante comprend placer un élément (20) environnant dans une position où la partie (14 ; 54 ; 74) environnante doit être formée dans un moule (40) pour former l'intérieur du matériau (10 ; 50 ; 70 ; 80) composite,
le stade (S14) de formation d'un coin comprend placer un élément (30 ; 60) de coin en une position où le coin (12 ; 52 ; 72 ; 82) doit être formé dans le moule (40), et
on retire le moule (40), après le stade (S16) d'intégration.

10. Procédé de formation d'un matériau (10 ; 50 ; 70 ; 80) composite suivant l'une quelconque des revendications 1 à 9, dans lequel
on obtient le matériau (10 ; 50 ; 70 ; 80) composite en imprégnant des fibres renforcées par de la résine thermodurcissable,
la résine thermodurcissable prend un état ramolli, un état durci et un état semi-durci,
le stade (S12) de formation d'une partie environnante et le stade (S14) de formation d'un coin comprennent mettre la résine thermodurcissable incluse dans au moins l'une de la partie (14 ; 54 ; 74) environnante et du coin (12 ; 52 ; 72 ; 82) à l'état ramolli ou à l'état semi-durci, et
le stade (S16) d'intégration comprend mettre la résine thermodurcissable à l'état durci.

11. Procédé de formation d'un matériau (10 ; 50 ; 70 ; 80) composite suivant la revendication 10, dans lequel
la résine thermodurcissable, de laquelle on imprègne la partie (14 ; 54 ; 74) environnante, est d'un même type que la résine thermodurcissable, de laquelle on imprègne le coin (12 ; 52 ; 72 ; 82), et
le stade (S16) d'intégration comprend intégrer la résine thermodurcissable dont la partie (14 ; 54 ; 74) est imprégnée et la résine thermodurcissable dont le coin (12 ; 52 ; 72 ; 82) est imprégné.

12. Procédé de formation d'un matériau (10 ; 50 ; 70 ; 80) composite suivant la revendication 10 ou 11, dans lequel
un élément (20) environnant pour former la partie (14 ; 54 ; 74) environnante comprend les fibres renforcées, et
un élément (30 ; 60) de coin pour former le coin (12 ; 52 ; 72 ; 82) ne comprend pas les fibres renforcées.

13. Procédé de formation d'un matériau (10 ; 50 ; 70 ; 80) composite suivant la revendication 10 ou 11, dans lequel
un élément (20) environnant pour former la partie (14 ; 54 ; 74) environnante comprend les fibres renforcées, et
un élément (30 ; 60) de coin pour former le coin (12 ; 52 ; 72 ; 82) comprend les fibres renforcées.

14. Procédé de formation d'un matériau (80) composite suivant l'une quelconque des revendications 1 à 13, dans lequel le coin (82) a une entrée (86), qui passe à travers le matériau (80) composite.

15. Matériau (10 ; 50 ; 70 ; 80) composite ayant un coin (12 ; 52 ; 72 ; 82) et une partie (14 ; 54 ; 74) environnante, qui comprend une première partie (14a) de face, une deuxième partie (14b) de face et une troisième partie (14c) de face, une première partie (14x) de liaison de face, une deuxième partie (14y) de liaison de face, et une troisième partie (14z) de liaison, dans lequel
la première partie (14x) de liaison de face est placée suivant la ligne suivant laquelle le première partie (14a) de face et la deuxième partie (14b) de face sont en intersection l'une avec l'autre, et sert à adoucir une courbe entre la première partie (14a) de face et la deuxième partie (14b) de face,
la deuxième partie (14y) de liaison de face est placée suivant la ligne suivant laquelle la deuxième partie (14b) de face et la troisième partie (14c) de face sont en intersection l'une avec l'autre, et sert à adoucir une courbe entre la deuxième partie (14b) de face et la troisième partie (14c) de face,
la troisième partie (14z) de liaison de face est placée suivant la ligne suivant laquelle la troisième partie (14c) de face et la première partie (14a) de face sont en intersection l'une avec l'autre, et sert à adoucir une courbe entre la troisième partie (14c) de face et la première partie (14a) de face,
la partie (14 ; 54 ; 74) environnante comprend la première partie (14a) de face, la deuxième partie (14b) de face et la troisième partie (14c) de face, qui sont en intersection les unes avec les autres,
le coin (12 ; 52 ; 72 ; 82) est un angle triédrique, qui est placé à la position où la première partie (14a) de face, la deuxième partie (14b) de face et la troisième partie (14c) de face de la partie (14 ; 54 ; 74) environnantes sont en intersection les unes avec les autres, dans lequel
le matériau (10 ; 50 ; 70 ; 80) composite est obtenu en imprégnant des fibres renforcées d'une résine thermodurcissable et le matériau (10 ; 50 ; 70 ; 80) composite comprend :
le coin (12 ; 52 ; 72 ; 82) ; et
la partie (14 ; 54 ; 74) environnante, qui comprend des fibres renforcées et entoure le coin (12 ; 52 ; 72 ; 82),
dans lequel le coin (12 ; 52 ; 72 ; 82) a une surface incurvée douce, qui est reliée continuellement à la première partie (14a) de face, à la deuxième partie (14b) de face et à la troisième partie (14c) de face.

16. Matériau (10 ; 80) composite suivant la revendication 15, dans lequel une interface d'interruption de fibres, qui est une interface sur laquelle une continuité des fibres renforcées incluses dans la partie (14) environnante est perdue et rompue, a une forme plane s'étendant dans une direction en épaisseur du matériau (10 ; 80) composite.

17. Matériau (70) composite suivant la revendication 15,
dans lequel une interface d'interruption de fibres, qui est interface sur laquelle une continuité des fibres renforcées incluses dans la partie (74) environnante est perdue et rompue, est conformée en une forme telle que la partie (74) environnante augmente d'un côté intérieur vers un côté extérieur du matériau (70) composite, alors que le coin (72) diminue en conséquence, ou une forme telle que la partie (74) diminue du côté intérieur vers le côté extérieur du matériau (70) composite, alors que le coin (72) augmente en conséquence.

18. Matériau (70) composite suivant la revendication 15,
dans lequel une interface d'interruption de fibres, qui est une interface sur laquelle une continuité des fibres renforcées incluses dans la partie (74) environnante est perdue et rompue, est conformée en une forme telle que, d'un côté intérieur vers un côté extérieur du matériau (70) composite, une région dans laquelle la partie (74) environnante augmente, alors que le coin (72) diminue, est placée en alternance avec une région dans laquelle la partie (74) environnante diminue, alors que la région de coin augmente.
